# EUROPEAN PATENT SPECIFICATION

(11) **EP 3 315 764 B1**
(45) Date of publication and mention of the grant of the patent: **07.04.2021**
(21) Application number: 17193471.4
(22) Date of filing: 27.09.2017
(51) Int. Cl.: F02N 11/04, F02N 11/08, F02N 19/00, F02D 41/04, H02P 3/22, H02P 6/24

(54) **STRADDLED VEHICLE MOUNTING AN ENGINE UNIT**
MIT EINER MOTOREINHEIT AUSGERÜSTETES GRÄTSCHSITZFAHRZEUG
VÉHICULE DE TYPE À ENFOURCHER ÉQUIPÉ D'UNE UNITÉ DE MOTEUR

(30) Priority: 28.09.2016 JP 2016189633
(43) Date of publication of application: 02.05.2018
(73) Proprietor: Yamaha Hatsudoki Kabushiki Kaisha, Iwata-shi Shizuoka 438-8501 (JP)
(72) Inventor: OBA, Tatsuhiro, Iwata-shi, Shizuoka 438-8501 (JP); NISHIKAWA, Takahiro, Iwata-shi, Shizuoka 438-8501 (JP)
(74) Representative: Grünecker Patent- und Rechtsanwälte PartG mbB

(56) References cited:
- EP-A1- 3 051 118
- EP-A1- 3 064 748
- EP-A1- 3 064 762
- WO-A1-2015/166258
- US-A1- 2015 377 162

## Description

The present teaching relates to a straddled vehicle.

Documents WO 2015/166258 A1 and US 2015/0377162 A1 disclose an engine, a rotary electric machine coupled to the engine, and switching parts which are controlled such that the rotary electric machine is operated as a generator and thus a braking torque is applied to the engine.

Document WO 2015/166258 A1 discloses a vehicle mounting an engine unit, provided with a start-stop function, wherein the variations in torque of the engine during the engine stop are compensated by controlling the electrical machine and wherein the engine is stopped at a particular position.

Document US 2015/0377162 A1 discloses a vehicle provided with a power-generation braking mode and a short-circuit braking torque when the engine is being stopped.

Types of engines mounted to straddled vehicles include a four-stroke single-cylinder engine having, during four strokes, a high-load region in which a high load is put on rotation of a crankshaft of the engine and a low-load region in which a low load is put on rotation of the crankshaft. The four-stroke single-cylinder engine requires that a starter motor generate a high output torque for enabling the crankshaft to rotate beyond the high-load region at a time of engine start.

A stop position of the crankshaft where its rotation stops upon stopping of an operation of the four-stroke single-cylinder engine varies each time an operation of the engine stops. That is, there is a variation in the rotation stop position of the crankshaft. A variation in the stop position leads to a variation in the torque required for enabling the crankshaft to rotate beyond the high-load region at a time of engine start (at a time of restart). At a time of engine start, the crankshaft is driven by the starter motor. An attempt to increase the output torque of the starter motor so as to cover the torque variation results in an increase in power consumption of the starter motor. The starter motor is operated with a battery power. From the viewpoint of mountability of the battery to a straddled vehicle, it is desirable that an increase in power consumption of the starter motor be suppressed.

For example, Patent Document 1 shows an engine starting control device. The engine starting control device of Patent Document 1 performs such a control that, if the engine rotational frequency is more than a priority rotational frequency when a throttle valve is opened by a restart operation after stop of a combustion operation, a starter motor immediately drives an engine crankshaft in forward rotation. If the engine rotational frequency is equal to or less than the priority rotational frequency, it is difficult to overcome a compression stroke even though a current is applied to the starter motor for causing forward rotation. Therefore, the engine starting control device of Patent Document 1 is configured to, if the engine rotational frequency is equal to or less than the priority rotational frequency, position the crankshaft to a predetermined position for starting the engine after rotation of the crankshaft once stops and before the engine is restarted. To be specific, the engine starting control device applies a current to the starter motor for causing reverse rotation, thus driving the crankshaft in reverse rotation to a position where a rotational load at a time of start is low. Then, the engine starting control device perform forward rotation. This is how the engine starting control device of Patent Document 1 tries to suppress an increase in power consumption of the starter motor.

Patent Document 1: Japanese Patent No. 4082578

The engine starting control device of Patent Document 1 is configured to, after rotation of the crankshaft once stops, drive the crankshaft in reverse rotation to a position where a rotational load is low, and then drive the crankshaft in forward rotation. This prolongs a time period until engine restart after a combustion stop instruction.

In an engine unit including a four-stroke single-cylinder engine, it is demanded that a time period until restart after a combustion stop instruction be shortened with suppression of an increase in power consumption.

An object of the present teaching is to provide an engine unit and a straddled vehicle that are able to shorten a time period until restart after a combustion stop instruction with suppression of an increase in power consumption.

The present inventors conducted studies on power consumption from when a combustion operation of an engine is stopped to when the engine is restarted, and a time period until the restart.

For example, the engine starting control device of Patent Document 1, before starting the engine, once drives the crankshaft in reverse rotation to a stage where the rotational load is low, and then drives the crankshaft in forward rotation.

In contrast, stopping the crankshaft at a position where the rotational load is low after stop of engine combustion is able to shorten the time period until restart while suppressing an increase in power consumption.

To shorten the time period until restart while suppressing an increase in power consumption by stopping the crankshaft at a position where the rotational load is low, however, it is required that a variation in the rotation stop position of the crankshaft be suppressed. A variation in the stop position occurs when, for example, the engine stops combustion at a common timing. For example, the engine temperature at a time when the engine stops combustion influences the viscosity of an engine oil. In addition, atmospheric pressure at the time when the engine stops combustion influences air pressure applied to a piston. Thus, the engine temperature and the atmospheric pressure cause a variation in the stop position of the crankshaft.

There is a conventional concept that, to suppress a variation in the rotation stop position of the crankshaft, it is necessary to detect engine operation environments such as the engine temperature, atmospheric pressure, etc., and perform a rotation stopping control based on a result of the detection.

The present inventors also conducted detailed studies on the relationship between still another condition and the stop position of the crankshaft. As a result, the present inventors found out the followings.

A combination of a position of the crankshaft and the instantaneous value of the rotation speed of the crankshaft at that position is more directly indicative of the state of the four-stroke single-cylinder engine body at a time point when the crankshaft is at that position, as compared with the engine temperature and the atmospheric pressure, for example. Thus, the combination of a position of the crankshaft and the instantaneous value of the rotation speed of the crankshaft at that position is more precisely indicative of the state of the four-stroke single-cylinder engine body at the time point when the crankshaft is at that position. Accordingly, a variation in the stop position of the crankshaft can be effectively suppressed by changing a braking force based on both the position of the crankshaft after stop of a combustion operation and the instantaneous value of the rotation speed of the crankshaft at that position.

After stop of the combustion operation, the braking force is changed based on both the position of the crankshaft under stop control and the instantaneous value of the rotation speed of the crankshaft at that position. In this manner, a braking force to which the state of the four-stroke single-cylinder engine body is precisely reflected can be applied to forward rotation of the crankshaft. Since the braking force is changed based on both the position of the crankshaft and the instantaneous value of the rotation speed of the crankshaft at that position, the braking force to which the state of the four-stroke single-cylinder engine body is reflected is changed at a position suitable for suppressing a variation in the stop position of the crankshaft. With such a configuration in which, during the stop control of applying a braking force to rotation of the crankshaft, the braking force is changed based on the position of the crankshaft and the instantaneous value of the rotation speed, a variation in the stop position of the crankshaft of the single-cylinder engine can be suppressed without using the temperature and atmospheric pressure, for example.

The teaching of the present application is a teaching accomplished based on the findings above.

To solve the problems described above, a straddled vehicle according to claim 1 is provided. Preferred embodiments are specified in the dependent claims. Furthermore, the present teaching adopts the following configurations.

An engine unit mounted to a straddled vehicle, the engine unit including:
a four-stroke single-cylinder engine body including one cylinder and a crankshaft, in which a high-load region and a low-load region occur during four strokes, the high-load region having a high load on rotation of the crankshaft, the low-load region having a lower load on rotation of the crankshaft than that of the high-load region;
a permanent magnet type rotary electric machine including a permanent magnet, a rotor, and a stator, the rotor connected to the crankshaft so as to be rotatable with its speed ratio fixed relative to the crankshaft, the permanent magnet type rotary electric machine configured to be driven by a battery provided in the straddled vehicle to apply a force to rotation of the crankshaft;
an inverter including a plurality of switching parts, by which a current flowing between the battery and the permanent magnet type rotary electric machine is controlled; and
a control device including a rotary electric machine control unit and a combustion control unit, the rotary electric machine control unit configured to control the plurality of switching parts included in the inverter to control a current flowing between the battery and the permanent magnet type rotary electric machine, the combustion control unit configured to control a combustion operation of the four-stroke single-cylinder engine body,
the control device configured to perform a stop control of controlling the plurality of switching parts such that the permanent magnet type rotary electric machine is configured to apply a braking force to forward rotation of the crankshaft, in at least part of a time period during which the crankshaft continues forward rotation after the four-stroke single-cylinder engine body is configured to stop a combustion operation and until the crankshaft is configured to stop the forward rotation,
the control device configured to change the braking force at least once during the stop control, by changing an operation timing of the plurality of switching parts based at least on both a position of the crankshaft and an instantaneous value of the rotation speed of the crankshaft at the position.

The engine unit includes the four-stroke single-cylinder engine body and the permanent magnet type rotary electric machine. In the four-stroke single-cylinder engine body, the high-load region and the low-load region occur during four strokes. The load put on rotation of the crankshaft in the low-load region is lower than that in the high-load region. In a single-cylinder engine body, as compared with an engine including two or more cylinders, there is a greater difference between the load in the low-load region and the load in the high-load region. That is, when starting the four-stroke single-cylinder engine body, an increment of the load in the high-load region relative to that in the low-load region is greater as compared with an engine including two or more cylinders.

The control device controls the combustion operation of the four-stroke single-cylinder engine body, and also controls the plurality of switching parts included in the inverter. Thus, the current flowing between the battery and the permanent magnet type rotary electric machine is controlled, so that the permanent magnet type rotary electric machine applies a braking force to rotation of the crankshaft.

The control device performs the stop control at least part of the time period during which the crankshaft continues forward rotation after the four-stroke single-cylinder engine body stops the combustion operation and until the crankshaft stops. The control device controls the plurality of switching parts in the stop control, to direct the permanent magnet type rotary electric machine to apply a braking force to rotation of the crankshaft. The control device changes the braking force during the stop control. When changing the braking force, the control device controls the plurality of switching parts based on both a position of the crankshaft and an instantaneous value of the rotation speed of the crankshaft at the position.

A combination of a position of the crankshaft and an instantaneous value of the rotation speed of the crankshaft at the position directly and precisely represents a state of the four-stroke single-cylinder engine body at a time point when the crankshaft is at that position. Changing the braking force during the stop control based on both a position of the crankshaft and an instantaneous value of the rotation speed of the crankshaft at the position results in application of a braking force that precisely reflects the state of the four-stroke single-cylinder engine body. Moreover, the braking force that reflects the state of the four-stroke single-cylinder engine body is changed at a position suitable for enabling the crankshaft to stop with suppression of variation in the rotation speed of the crankshaft and the braking force to be changed. A variation in the stop position of the crankshaft can be suppressed accordingly. This makes it easy to stop the crankshaft at a position where a lower rotational load is put on rotating the crankshaft at a time of engine start. A torque required for driving the crankshaft is suppressed, and thus power required for driving the crankshaft is suppressed. To start the engine after stop of the crankshaft, the crankshaft is driven in forward rotation so that the four-stroke single-cylinder engine body is restarted. Accordingly, a time period until restart after stop of the combustion operation can be shortened in the four-stroke single-cylinder engine body having the high-load region and the low-load region.

In the present teaching, a variation in the stop position of the crankshaft is suppressed by changing the braking force during the stop control based on both a position of the crankshaft and an instantaneous value of the rotation speed of the crankshaft at the position. This shortens a time period until restart, with suppression of an increase in power consumption. This is different from a concept of, for example, applying a braking force without making any change in accordance with the position and the rotation speed merely for the purpose of stopping the crankshaft in a short time period after stop of the combustion operation. Here, the high-load region means a region, in one combustion cycle of the four-stroke single-cylinder engine body, where a load torque is higher than the load torque value averaged over one combustion cycle. The low-load region means a region, in one combustion cycle of the four-stroke single-cylinder engine body, where a load torque is lower than the load torque value averaged over one combustion cycle. The load torque in one combustion cycle of the four-stroke single-cylinder engine body is measured as, for example, a torque at a time of rotating the crankshaft with an external force while the combustion operation is stopped.

The stop control may be performed throughout the time period during which the crankshaft continues forward rotation after the four-stroke single-cylinder engine body stops the combustion operation and until the crankshaft stops the forward rotation as illustrated in an embodiment described later, or alternatively the stop control may be performed in part of the time period.

Although the braking force may be changed once or a plurality of times for example, it is preferable that the braking force is changed a plurality of times. It is more preferable that the braking force is changed at least once in each combustion cycle. It is still more preferable that the braking force is changed at least once in one stroke. It is particularly preferable that the braking force is changed each time the instantaneous value is detected

In the engine unit,
the control device may include a storage device that is configured to prestore change data including a plurality of correspondence relationships of a condition concerning an operation timing of the plurality of switching parts relative to a position of the crankshaft and an instantaneous value of the rotation speed of the crankshaft at the position, and
when changing the braking force, the control device may be configured to change the braking force by changing, on a real time basis, an operation timing of the plurality of switching parts with reference to the change data based on a position of the crankshaft and an instantaneous value of the rotation speed of the crankshaft at the position.

In this configuration, at a plurality of positions where the crankshaft locates along with rotation, a condition concerning a change of the braking force can be identified based on a position of the crankshaft and an instantaneous value of the rotation speed, with reference to the change data including the plurality of correspondence relationships. Changing the braking force during the stop control based on both each of the plurality of positions of the crankshaft and an instantaneous value of the rotation speed at the position provides an easier and more accurate control of the braking force as compared with, for example, changing the braking force based on calculation of a model expression. In addition, the change of the braking force is implemented by changing, on a real time basis, the operation timing of the plurality of switching parts with reference to the change data including the plurality of correspondence relationships. This can further suppress a variation in the stop position of the crankshaft. It is therefore easy to ensure that the crankshaft starts rotation at a position where a low rotational load is put on the crankshaft, at a time of rotating the crankshaft in order to start the four-stroke single-cylinder engine body. Accordingly, the time period until restart after stop of the combustion operation can be shortened with further suppression of an increase in power consumption.

In the engine unit,
in at least part of a time period during which the stop control is performed, the control device is configured to perform a power consumption control of controlling the plurality of switching parts such that a current is supplied from the battery to the permanent magnet type rotary electric machine to direct the permanent magnet type rotary electric machine to apply a braking force to rotation of the crankshaft.

This enables the permanent magnet type rotary electric machine to apply a stronger baking force to rotation of the crankshaft, by the power consumption control which consumes battery power. As a result, the control of rotation of the crankshaft, which is implemented by changing the braking force based on a position of the crankshaft and an instantaneous value of the rotation speed, can be performed more precisely. Thus, a variation in the stop position of the crankshaft can be further suppressed. Accordingly, the time period until restart after stop of the combustion operation can be shortened with further suppression of an increase in power consumption. Here, the power consumption control, which is not particularly limited, may be based on driving with sinusoidal current supply as illustrated in an embodiment described later, or may be based on driving with rectangular current supply. The change of the operation timing of the switching parts may be implemented by any of changing the duty cycle, changing the angle of advancing or retarding (degrees), and a combination thereof.

In the engine unit, in the power consumption control, the control device may be configured to control a current to be supplied from the battery to the permanent magnet type rotary electric machine, in accordance with a voltage of the battery.

In the power consumption control, the plurality of switching parts are controlled such that a current is supplied from the battery to the permanent magnet type rotary electric machine, thus directing the permanent magnet type rotary electric machine to apply a braking force to rotation of the crankshaft. The braking force is therefore susceptible to the battery voltage. In this configuration, the current to be supplied from the battery to the permanent magnet type rotary electric machine is controlled in accordance with the battery voltage. This makes the braking force less variable according to the battery voltage. As a result, a variation in the stop position of the crankshaft is further suppressed. Accordingly, the time period until restart after stop of the combustion operation can be shortened with further suppression of an increase in power consumption.

In the engine unit, the permanent magnet type rotary electric machine may include a winding that is electrically connected to the plurality of switching parts, and
during the stop control, the control device may be configured to change the braking force by changing, on a real time basis, an operation timing of the plurality of switching parts so as to start a short-circuit control in which the winding is short-circuited to apply a braking force to forward rotation of the crankshaft, based at least on both a position of the crankshaft and an instantaneous value of the rotation speed of the crankshaft at the position.

In this configuration, short-circuiting the winding of the permanent magnet type rotary electric machine leads to generation of an induced voltage in the winding itself, which causes a braking force to occur in the permanent magnet type rotary electric machine. It is therefore possible to apply a braking force to rotation of the crankshaft without any need to switch between conduction and non-conduction of the switching parts in accordance with the positions of the crankshaft and the rotor. As a result, a variation in the stop position of the crankshaft can be suppressed even when, for example, the detection accuracy of the position of the crankshaft deteriorates as the rotation speed of the crankshaft decreases. Accordingly, the time period until restart after stop of the combustion operation can be shortened with further suppression of an increase in power consumption.

In the engine unit,
the control device may include a storage device that is configured to prestore change data including a plurality of correspondence relationships of a condition concerning an operation timing of the plurality of switching parts for starting the short-circuit of the winding relative to a plurality of positions where the crankshaft sequentially locates in one combustion cycle of the four-stroke single-cylinder engine body and an instantaneous value of the rotation speed of the crankshaft at each of the plurality of positions, the instantaneous value included in the change data being an upper limit value of the speed that enables, as a result of the short-circuit control being started at a position corresponding to the instantaneous value, the crankshaft to be stopped in a predetermined target region within the one combustion cycle, and when the instantaneous value of the rotation speed of the crankshaft becomes equal to or less than an instantaneous value included in the change data, the control device may direct the plurality of switching parts to start the control based on short-circuit of the winding at, among the plurality of positions, a position corresponding to the instantaneous value included in the change data.

In this configuration , a plurality of positions in one combustion cycle are set as the position at which the control based on short-circuit of the winding can be started. In the change data stored in the storage device, each of the plurality of positions and an instantaneous value of the rotation speed of the crankshaft at the position are associated with a condition for starting the short-circuit control, the condition concerning an operation timing of the plurality of switching parts. An instantaneous value included in the change data is the upper limit value of the speed that enables the crankshaft to be stopped in a predetermined target region if the short-circuit control is started at a position corresponding to that instantaneous value. If the crankshaft passes through a certain position among the plurality of positions at a speed equal to or less than the instantaneous value corresponding to the certain position in the change data, the control device starts, from that position, the control of directing the plurality of switching parts to short-circuit the winding. Thus, the short-circuit of the winding is started when a position of the crankshaft and an instantaneous value of the rotation speed are under the condition that enables the crankshaft to be stopped in the target region as a result of the short-circuit of the winding.

During the control based on short-circuit of the winding, a braking force according to the rotation speed of the crankshaft can be applied irrespective of the detection accuracy of the position of the crankshaft. Since the control based on short-circuit of the winding is started at an appropriate timing based on both the position of the crankshaft and the instantaneous value of the rotation speed, the crankshaft is likely to stop in the target region. Accordingly, the time period until restart after stop of the combustion operation can be shortened with further suppression of an increase in power consumption.

In the engine unit,
each time the crankshaft is rotated through a predefined measurement angle, the control device may be configured to obtain, as an instantaneous value of the rotation speed of the crankshaft, the rotation speed of the crankshaft rotating through the measurement angle.

In this configuration, each time the crankshaft is rotated through the measurement angle, the rotation speed is calculated and the braking force is changed based on the calculated rotation speed. This enables a precise control of the stop position of the crankshaft. Thus, a variation in the stop position of the crankshaft can be further suppressed. Accordingly, the time period until restart after stop of the combustion operation can be shortened with further suppression of an increase in power consumption. In a case where a plurality of detection object parts for obtaining the rotation speed are arranged at such intervals that one of the intervals is different from the others as illustrated in an embodiment described later, the instantaneous value of the rotation speed of the crankshaft cannot be obtained in the one interval even when the crankshaft is rotated through the measurement angle. In the other intervals, however, the instantaneous value can be obtained, and therefore such a configuration also falls into the above-mentioned configuration.

In the engine unit,
the measurement angle may be 30 degrees.

In this configuration, each time the crankshaft is rotated through 30 degrees, the rotation speed is calculated. This enables a more precise control of the stop position of the crankshaft. Thus, a variation in the stop position of the crankshaft can be further suppressed. Accordingly, the time period until restart after stop of the combustion operation can be shortened with further suppression of an increase in power consumption.

In the engine unit,
the measurement angle may be 15 degrees.

In this configuration , each time the crankshaft is rotated through 15 degrees, the rotation speed is calculated. This enables a more precise control of the stop position of the crankshaft. Thus, a variation in the stop position of the crankshaft can be further suppressed. Accordingly, the time period until restart after stop of the combustion operation can be shortened with further suppression of an increase in power consumption.

In the engine unit, the measurement angle may be 10 degrees.

In this configuration, each time the crankshaft is rotated through 10 degrees, the rotation speed is calculated. Thus, a variation in the stop position of the crankshaft can be further suppressed. Accordingly, the time period until restart after stop of the combustion operation can be shortened with further suppression of an increase in power consumption.

In the engine unit, the control device may change the braking force at least once during the stop control by changing, on a real time basis, an operation timing of the plurality of switching parts based on both a position of the crankshaft and an instantaneous value of the rotation speed of the crankshaft at the position, such that the permanent magnet type rotary electric machine is configured to direct the crankshaft to stop rotation in either of an expansion stroke and an exhaust stroke of the four-stroke single-cylinder engine body.

In this configuration, upon reception of a start instruction, the crankshaft starts forward rotation from either the expansion stroke or the exhaust stroke. This makes it likely that the crankshaft starts forward rotation from the low-load region in which the four-stroke single-cylinder engine body can be easily started with a low output torque of a motor. The crankshaft moves in forward rotation over the low-load region which is a wide region ranging at least from the exhaust stroke to the compression stroke, before reaching the high-load region. That is, a long run-up zone for acceleration is ensured, so that the crankshaft can increase the rotation speed before reaching the high-load region. This enables the crankshaft to overcome the high-load region by using a large inertial force generated by the increased rotation speed even though, for example, the crankshaft is not driven in reverse rotation. Accordingly, the time period until restart after stop of the combustion operation can be shortened with further suppression of an increase in power consumption.

In the engine unit, the control device may be configured to change the braking force at least once during the stop control by changing, on a real time basis, an operation timing of the plurality of switching parts based on both a position of the crankshaft and an instantaneous value of the rotation speed of the crankshaft at the position while the crankshaft is rotating in either of an intake stroke and a compression stroke of the four-stroke single-cylinder engine body.

In this configuration, the braking force is changed based on both a position of the crankshaft and an instantaneous value of the rotation speed in either the intake stroke or the compression stroke. It is therefore likely that the crankshaft stops in a low-load region which follows the intake stroke and the compression stroke. Accordingly, the time period until restart after stop of the combustion operation can be shortened with further suppression of an increase in power consumption.

The change of the braking force which is implemented by changing, on a real time basis, the operation timing of the plurality of switching parts includes, for example, changing the stop control style into another style. The change of the braking force includes, for example, changing a factor that defines the operation timing.

In the engine unit, the control device may be configured to change the braking force at least once during the stop control by changing, on a real time basis, an operation timing of the plurality of switching parts based on both a position of the crankshaft and an instantaneous value of the rotation speed of the crankshaft at the position while the crankshaft is rotating in an intake stroke of the four-stroke single-cylinder engine body.

In this configuration, the braking force is changed at an earlier stage. This makes it likely that the crankshaft stops in a low-load region. Accordingly, the time period until restart after stop of the combustion operation can be shortened with further suppression of an increase in power consumption.

In the engine unit,
the four-stroke single-cylinder engine body may include a fuel injector device and an intake valve, and
the control device may be configured to start rotation of the crankshaft by controlling the plurality of switching parts in response to reception of a start instruction, and then may be configured direct the fuel injector device to inject a fuel in response to the crankshaft rotating through a certain predefined angle, the certain predefined angle being equal to or less than an angle from a compression top dead center to a position where the intake valve is closed in the four-stroke single-cylinder engine body.

In this configuration, the braking force is changed such that the crankshaft stops rotation in a target region. Thus, the crankshaft normally stops in the target region. After the crankshaft starts rotation in response to reception of a start instruction and before the crankshaft is rotated to the position where the intake valve is closed, the fuel is injected. In this configuration, even when, for example, a timing for injecting the fuel is not detected in a combustion cycle where the crankshaft starts rotation in response to reception of a start instruction, the fuel injector device injects the fuel in the same combustion cycle as the combustion cycle including the stop position. It is therefore likely that, after the crankshaft starts rotation, fuel combustion starts in the same combustion cycle as the combustion cycle including the stop position. That is, it is unlikely that the start of fuel combustion is deferred to the next combustion cycle that follows the stop position. Accordingly, the time period until restart after stop of the combustion operation can be further shortened.

A further aspect is a straddled vehicle including the engine unit of any one of the previous configurations.

This straddled vehicle is able to suppress power required for driving the crankshaft in rotation so as to start the four-stroke single-cylinder engine body included in the engine unit. This straddled vehicle is also able to suppress the need to, after the crankshaft stops, drive the crankshaft in reverse rotation to a position where the rotational load is low. Accordingly, the time period until restart after stop of the combustion operation can be shortened with suppression of an increase in power consumption.

The engine unit of the present teaching is mounted to a straddled vehicle. Examples of the straddled vehicle of the present teaching include motorcycles, motor tricycles, and ATVs (All-Terrain Vehicles).

The four-stroke single-cylinder engine body of the present teaching is a four-stroke engine. The four-stroke single-cylinder engine body, in operation, repeats an intake stroke, a compression stroke, a combustion stroke (expansion stroke), and an exhaust stroke.

The permanent magnet type rotary electric machine of the present teaching is a rotary electric machine including a permanent magnet. The permanent magnet type rotary electric machine of the present teaching includes a stator and a rotor. The rotor of the permanent magnet type rotary electric machine of the present teaching includes a permanent magnet. The rotor of the permanent magnet type rotary electric machine of the present teaching includes no winding. The stator of the permanent magnet type rotary electric machine of the present teaching includes windings. The permanent magnet type rotary electric machine of the present teaching includes windings corresponding to a plurality of phases. The windings of the stator are wound on a stator core, for example. The rotor is rotated with the permanent magnet facing the stator core with an air gap therebetween. The permanent magnet type rotary electric machine of the present teaching includes a rotary electric machine of radial gap type and a rotary electric machine of axial gap type. The rotary electric machine of radial gap type, which is the permanent magnet type rotary electric machine of the present teaching, includes a rotary electric machine of outer rotor type and a rotary electric machine of inner rotor type, the rotary electric machine of outer rotor type provided with a rotor that rotates outside a stator, the rotary electric machine of inner rotor type provided with a rotor that rotates inside a stator.

The permanent magnet type rotary electric machine of the present teaching generates power. The permanent magnet type rotary electric machine of the present teaching includes a permanent magnet type rotary electric machine having a function as a motor and a permanent magnet type rotary electric machine not having a function as a motor.

The permanent magnet type rotary electric machine of the present teaching includes a rotary electric machine of interior permanent magnet type (IPM type) in which a permanent magnet of a rotor is embedded in a yoke, and a rotary electric machine of surface permanent magnet type (SPM type) in which a permanent magnet is exposed from a yoke.

The permanent magnet type rotary electric machine may be attached to a crankshaft with interposition of a power transmission mechanism, for example. The permanent magnet type rotary electric machine may be connected to a crankshaft with interposition of neither a variable ratio transmission nor a clutch, for example.

The inverter of the present teaching includes the plurality of switching parts by which a current flowing between the battery and the permanent magnet type rotary electric machine is controlled. The switching parts are transistors, for example. The switching parts include FETs (Field Effect Transistors), thyristors, and IGBTs (Insulated Gate Bipolar Transistors), for example. Functions of the inverter include a rectification function. The inverter has a function for outputting a DC, for example. The inverter controls a current outputted from the permanent magnet type rotary electric machine to the battery and a power consuming apparatus. The inverter includes a bridge inverter composed of a plurality of switching parts, for example.

The control device of the present teaching includes the rotary electric machine control unit and the combustion control unit. The control performed by the rotary electric machine control unit and the combustion control unit is a control performed by the control device. The rotary electric machine control unit and the combustion control unit may be, for example, configured as separate devices or integrated as a single device. The control device of the present teaching performs the stop control of stopping rotation of the crankshaft. In the stop control, the plurality of switching parts are controlled such that a braking force is applied to rotation of the crankshaft. The stop control is performed by the rotary electric machine control unit. Stop of the combustion operation of the four-stroke single-cylinder engine body is performed by the combustion control unit.

The stop control of the present teaching includes, for example, a sinusoidal current supply control, a vector control, a phase control, and a control based on short-circuit of the winding of the permanent magnet type rotary electric machine.

In the present teaching, changing the operation timing of the plurality of switching parts includes, for example, changing a repeated operation pattern. That is, the control device changes the operation timing of the switching parts so as to change the repeated operation pattern of the switching parts.

For example, in a sinusoidal current supply control with pulse width modulation, the on/off duty cycle of the switching parts repeatedly varies in the shape of a sinusoidal wave. That is, the duty cycle varies in a periodically repeated pattern. In this case, changing the operation timing includes changing it such that the duty cycle of one periodical pattern differs from the duty cycle of the previous periodical pattern. Changing the operation timing includes, for example, changing the degrees of modulation of a pulse width by a sinusoidal wave in the sinusoidal current supply control with pulse width modulation. Changing the operation timing includes, for example, changing the type of the stop control. Changing the operation timing includes, for example, changing the operation of the switching parts from a control of not short-circuiting the winding to a control based on short-circuit of the winding.

In the present teaching, the position of the crankshaft is the rotational position of the crankshaft. The position of the crankshaft represents the position in one combustion cycle of the four-stroke engine. The position of the crankshaft is obtained as, for example, a detection result of the detection object parts provided to the rotor of the rotary electric machine or the crankshaft. For example, the position of the crankshaft is obtained each time the detection object part passes through the position of a detection device. Means for detecting the position and rotation speed of the crankshaft includes, for example, a pick-up coil, a Hall IC, and an encoder.

In the present teaching, the instantaneous value of the rotation speed of the crankshaft is the rotation speed in a time period shorter than one combustion cycle of the four-stroke engine. The instantaneous value of the rotation speed of the crankshaft is different from the rotation speed averaged over one combustion cycle of the four-stroke engine or averaged over a time period longer than one combustion cycle of the four-stroke engine. The instantaneous value of the rotation speed of the crankshaft is detected a plurality of times during one combustion cycle of the four-stroke engine. The number of instantaneous values of the rotation speed detected in one combustion cycle corresponds to, for example, the number of pulses, each of which indicates that the detection device detects the detection object part along with rotation of the crankshaft. The instantaneous value of the rotation speed of the crankshaft when the crankshaft is at a position is identified based on, for example, a time period between detection of a detection object part corresponding to the position of the crankshaft and previous detection.

The control device of the present teaching changes the operation timing of the plurality of switching parts based at least on both a position of the crankshaft and an instantaneous value of the rotation speed of the crankshaft at the position. Changing the operation timing based on both a position of the crankshaft and an instantaneous value of the rotation speed of the crankshaft at the position includes, for example, changing based on information that is obtained with reference to data including a plurality of correspondence relationships between the position and the rotation speed. Changing the operation timing based on both a position of the crankshaft and an instantaneous value of the rotation speed of the crankshaft at the position includes, for example, changing based on a result of calculation of an expression or the like.

The control device of the present teaching, for example, may change the operation timing of the plurality of switching parts based not only on a position of the crankshaft and an instantaneous value of the rotation speed of the crankshaft at the position but also on another factor.

The control device of the teaching is different from, for example, a device configured to change the operation timing of the switching parts based only on the position of the crankshaft. The control device of the present teaching is also different from, for example, a device configured to change the operation timing of the switching parts based only on the rotation speed of the crankshaft.

In the present teaching, it is preferable that the operation timing of the plurality of switching parts is changed on a real time basis, when changing the braking force. Changing the operation timing of the plurality of switching parts on a real time basis means that a change based on an obtained instantaneous value is performed at a timing prior to obtaining an instantaneous value next to the current instantaneous value.

The change data of the present teaching is data that defines a condition for changing the braking force. The change data includes a plurality of correspondence relationships between a condition about the position of the crankshaft and a condition about the instantaneous value of the rotation speed of the crankshaft. For example, the change data includes a map in which a condition about the position of the crankshaft is associated with a condition about the instantaneous value of the rotation speed of the crankshaft.

The present teaching is able to, in an engine unit and a straddled vehicle, shorten a time period until restart after stop of a combustion operation while suppressing an increase in power consumption.
[FIG. 1] FIG. 1 is a partial cross-sectional view schematically showing an outline configuration of an engine unit according to a first embodiment of the present teaching.
[FIG. 2] FIG. 2 is an illustrative diagram schematically showing the relationship between a crank angle position and a required torque at a time of engine start.
[FIG. 3] FIG. 3 is a cross-sectional view of a permanent magnet type rotary electric machine shown in FIG. 1, as sectioned perpendicular to its rotation axis line.
[FIG. 4] FIG. 4 is a block diagram outlining an electrical configuration of a straddled vehicle including the engine unit.
[FIG. 5] FIG. 5 is a flowchart illustrating operations of the engine unit shown in FIG. 1
[FIG. 6] FIG. 6 is a block diagram summarizing processing performed in a power consumption control.
[FIG. 7] FIG. 7(A) shows a map serving as change data in the power consumption control; and FIG. 7(B) shows a short-circuit control start map serving as change data.
[FIG. 8] FIG. 8 is a graph showing an exemplary change in the rotation speed of a crankshaft when an operation of an engine body is stopped.
[FIG. 9] FIG. 9 is a flowchart illustrating a restart operation of the engine unit.
[FIG. 10] FIG. 10 is a graph schematically showing the relationship between the position of the crankshaft and an event of the engine body.
[FIG. 11] FIG. 11 is a cross-sectional view of a permanent magnet type rotary electric machine according to a second embodiment, as sectioned perpendicular to its rotation axis line.
[FIG. 12] FIG. 12 shows an external appearance of a straddled vehicle equipped with the engine unit.

Hereunder, the present teaching is described based on preferred embodiments with reference to the drawings.

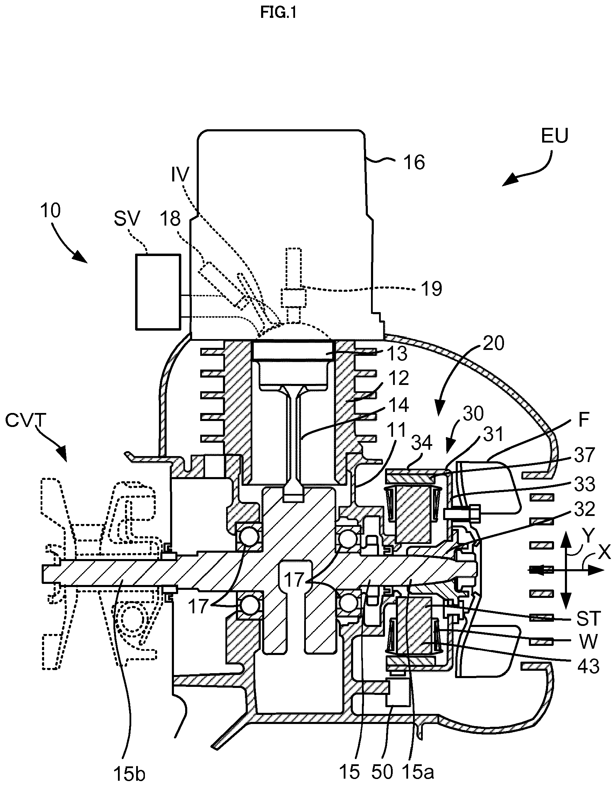

FIG. 1 is a partial cross-sectional view schematically showing an outline configuration of an engine unit EU according to a first embodiment of the present teaching. The engine unit EU of this embodiment is a four-stroke engine unit for use in a vehicle.

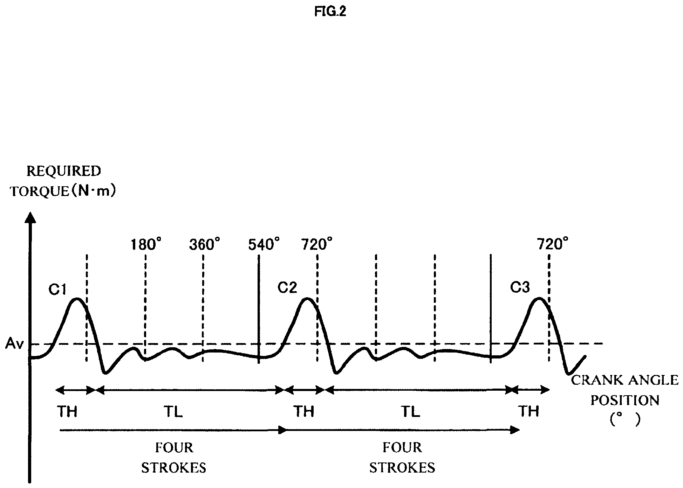

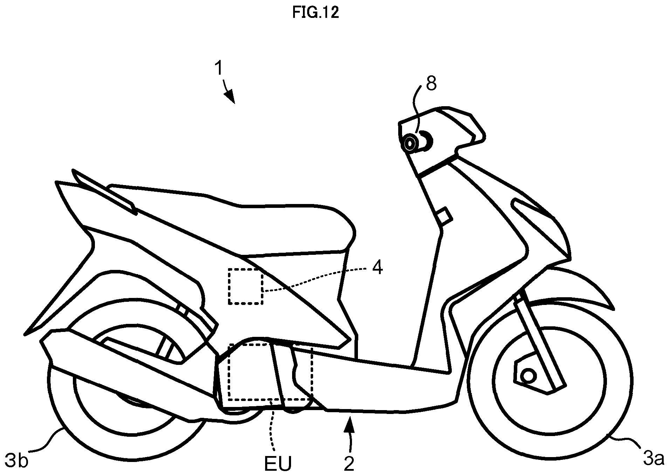

The engine unit EU is a unit mounted to, for example, a straddled vehicle 1 (see FIG. 12). The engine unit EU includes a four-stroke single-cylinder engine body 10 and a permanent magnet type rotary electric machine 20. The four-stroke single-cylinder engine body 10 is a single-cylinder four-stroke engine including one cylinder. Hereinafter, the four-stroke single-cylinder engine body is referred to simply as an engine body. In the engine body 10, the relationship shown in FIG. 2 is established between the crank angle position and a required torque. The required torque means a torque required for rotating a crankshaft 15.

FIG. 2 is an illustrative diagram schematically showing the relationship between the crank angle position and the required torque at a time of engine start.

The engine body 10 has, during four strokes, a high-load region TH in which a high load is put on rotation of the crankshaft 15 and a low-load region TL in which a load put on rotation of the crankshaft 15 is lower than that of the high-load region TH. The high-load region means a region in one combustion cycle of the engine body 10 where a load torque is higher than an average value Av of the load torque over the one combustion cycle. From the viewpoint of the rotation angle of the crankshaft 15, the low-load region TL is equal to or wider than the high-load region TH. To be specific, the low-load region TL is wider than the high-load region TH. In other words, a rotation angle region corresponding to the low-load region TL is wider than a rotation angle region corresponding to the high-load region TH. During rotation, the engine body 10 repeats four strokes, namely, an intake stroke, a compression stroke, an expansion stroke, and an exhaust stroke. The compression stroke overlaps the high-load region TH.

One combustion cycle of the engine body 10 includes one intake stroke, one compression stroke, one expansion stroke, and one exhaust stroke.

The engine body 10 includes a crank case 11, a cylinder 12, a piston 13, a connecting rod 14, and the crankshaft 15. The piston 13 is arranged in the cylinder 12 such that the piston 13 is freely movable to and fro.

The crankshaft 15 is rotatably arranged in the crank case 11. The connecting rod 14 connects the piston 13 and the crankshaft 15 to each other. A cylinder head 16 is attached to an upper portion of the cylinder 12. The cylinder 12, the cylinder head 16, and the piston 13 define a combustion chamber. The crankshaft 15 is supported on the crank case 11 via a pair of bearings 17 in a freely rotatable manner. The permanent magnet type rotary electric machine 20 is attached to one end portion 15a of the crankshaft 15. A transmission CVT is attached to the other end portion 15b of the crankshaft 15. The transmission CVT changes the gear ratio which is the ratio of an output rotation speed to an input rotation speed.

The engine unit EU includes an intake valve IV, a throttle valve SV, and a fuel injector device 18. The engine unit EU also includes an exhaust valve (not shown). The throttle valve SV adjusts the amount of air to be supplied to the combustion chamber. The degree of opening of the throttle valve SV is adjusted in accordance with, for example, an operation on an acceleration operator 8 (see FIG. 12). The fuel injector device 18 injects a fuel, to supply the fuel to the combustion chamber. The intake valve IV controls the amount of air flowing into the combustion chamber. The intake valve IV is opened and closed in accordance with the position of the crankshaft 15. The intake valve IV, when brought into an open state, supplies air containing the fuel to the combustion chamber. The engine body 10 has a spark plug 19.

The engine body 10 outputs rotational power through the crankshaft 15. The rotational power of the crankshaft 15 is transmitted to a wheel 3b (see FIG. 12) via the transmission CVT. The straddled vehicle 1 (see FIG. 12) is driven by the wheel 3b that receives the rotational power outputted from the engine body 10 through the crankshaft 15.

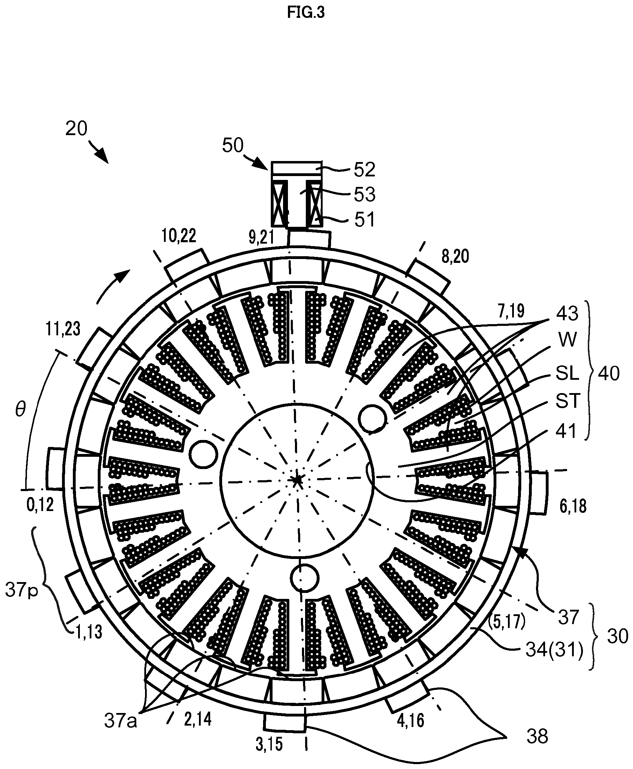

FIG. 3 is a cross-sectional view of the permanent magnet type rotary electric machine 20 shown in FIG. 1, as sectioned perpendicular to its rotation axis line. The permanent magnet type rotary electric machine 20 is described with reference to FIGS. 1 and 3.

The permanent magnet type rotary electric machine 20 is a three-phase brushless generator of permanent magnet type. The permanent magnet type rotary electric machine 20 functions also as a three-phase brushless motor of permanent magnet type.

The permanent magnet type rotary electric machine 20 includes a rotor 30 and a stator 40. The permanent magnet type rotary electric machine 20 of this embodiment is of radial gap type. The permanent magnet type rotary electric machine 20 is of outer rotor type. That is, the rotor 30 is an outer rotor, and the stator 40 is an inner stator.

The rotor 30 includes a rotor body part 31. The rotor body part 31 is made of, for example, a ferromagnetic material. The rotor body part 31 is in the shape of a cylinder with a bottom. The rotor body part 31 includes a cylindrical boss portion 32, a disk-shaped bottom wall portion 33, and a back yoke portion 34 having a cylindrical shape. The bottom wall portion 33 and the back yoke portion 34 are integrally formed. Here, it may also be acceptable that the bottom wall portion 33 and the back yoke portion 34 are formed as separate parts. The bottom wall portion 33 and the back yoke portion 34 are secured to the crankshaft 15 via the cylindrical boss portion 32. A winding to which a current is supplied is not provided in the rotor 30.

The rotor 30 includes a permanent magnet part 37. The rotor 30 includes a plurality of magnetic pole portions 37a. The plurality of magnetic pole portions 37a are formed by the permanent magnet part 37. The plurality of magnetic pole portions 37a are provided on an inner circumferential surface of the back yoke portion 34. In this embodiment, the permanent magnet part 37 includes a plurality of permanent magnets. The plurality of magnetic pole portions 37a are provided in the plurality of permanent magnets, respectively.

The permanent magnet part 37 may alternatively be configured as a single annular permanent magnet. In such a configuration, the single permanent magnet is magnetized such that the plurality of magnetic pole portions 37a appear side by side on the inner circumferential surface.

The plurality of magnetic pole portions 37a are provided such that N pole and S pole appear alternately with respect to the circumferential direction of the permanent magnet type rotary electric machine 20. In this embodiment, the number of magnetic poles of the rotor 30 opposed to the stator 40 is twenty-four. The number of magnetic poles of the rotor 30 means the number of magnetic poles opposed to the stator 40. No magnetic material is arranged between the magnetic pole portions 37a and the stator 40. The permanent magnets of the rotor 30 are opposed to the stator 40 with only an air gap therebetween. The magnetic pole portions 37a are provided outside the stator 40 with respect to the radial direction of the permanent magnet type rotary electric machine 20. The back yoke portion 34 is provided outside the magnetic pole portions 37a with respect to the radial direction. The number of magnetic pole portions 37a included in the permanent magnet type rotary electric machine 20 is more than the number of teeth 43.

A cooling fan F is provided to the bottom wall portion 33 of the rotor 30.

The stator 40 includes a stator core ST and a plurality of stator windings W. The stator core ST includes a plurality of teeth 43 arranged at intervals with respect to the circumferential direction. The plurality of teeth 43 integrally extend from the stator core ST toward radially outside. In this embodiment, eighteen teeth 43 in total are arranged at intervals with respect to the circumferential direction. In other words, the stator core ST has eighteen slots SL in total that are arranged at intervals with respect to the circumferential direction. The teeth 43 are arranged at equal intervals with respect to the circumferential direction.

The number of magnetic pole portions 37a included in the rotor 30 is more than the number of teeth 43. The number of magnetic pole portions 37a is equal to 4/3 of the number of slots.

The stator winding W is wound around each of the teeth 43. That is, the multi-phase stator windings W are arranged through the slots SL. In the state shown in FIG. 3, the stator windings W are in the slots SL. Each of the multi-phase stator windings W belongs to any of U-phase, V-phase, and W-phase. The stator windings W are arranged in the order of U-phase, V-phase, and W-phase, for example. A manner in which the stator winding W is wound may be, though not particularly limited, either concentrated winding or distributed winding, and it preferably is concentrated winding.

The rotor 30 includes, on its outer surface, a plurality of detection object parts 38 for detection of the rotation position of the rotor 30. Magnetic effects are used to detect the plurality of detection object parts 38. The plurality of detection object parts 38 arranged at intervals with respect to the circumferential direction are provided on the outer surface of the rotor 30. The detection object parts 38 are made of a ferromagnetic material.

In FIG. 3, numbers assigned to the respective detection object parts 38 are shown. The assignment of these numbers is made over one combustion cycle of the engine body 10 which corresponds to two rotations of the rotor 30. The crankshaft 15 is positioned at the compression top dead center when the detection object part 38 assigned "0" passes through the location of a rotor position detection device 50.

The rotor position detection device 50 is a device that detects the position of the rotor 30. The rotor position detection device 50 is provided at a position allowed to be opposed to the plurality of detection object parts 38. The rotor position detection device 50 includes a pick-up coil 51 that magnetically detects the detection object parts 38. The rotor position detection device 50 also includes a detection-purpose magnet 52 and a core 53.

The permanent magnet type rotary electric machine 20 is connected to the crankshaft 15 of the engine body 10. More specifically, the permanent magnet type rotary electric machine 20 is connected to the crankshaft 15 such that the rotor 30 is rotated with its speed ratio fixed relative to the crankshaft 15.

In this embodiment, the rotor 30 is attached to the crankshaft 15 without interposition of a power transmission mechanism (such as a belt, a chain, a gear, a speed reducer, or a speed increaser). The rotor 30 is rotated with a speed ratio of 1:1 relative to the crankshaft 15. The permanent magnet type rotary electric machine 20 is configured such that the rotor 30 is driven in forward rotation at a time of combustion operation of the engine body 10.

At a time of engine start, the permanent magnet type rotary electric machine 20 drives the crankshaft 15 in forward rotation to start the engine body 10. At a time of combustion operation of the engine body 10, the permanent magnet type rotary electric machine 20 is driven by the engine body 10 to generate power. That is, the permanent magnet type rotary electric machine 20 has both the function for driving the crankshaft 15 in forward rotation to start the engine body 10 and the function for being driven by the engine body 10 to generate power at a time of combustion operation of the engine body 10. During at least part of a time period following the start of the engine body 10, the permanent magnet type rotary electric machine 20 is driven in forward rotation by the crankshaft 15 to function as a generator.

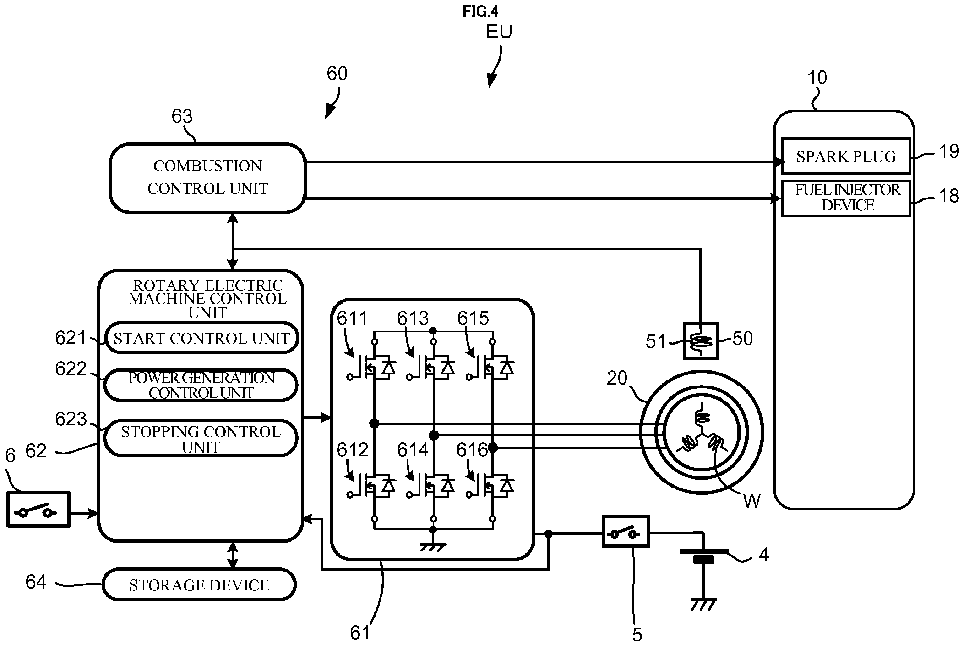

The permanent magnet type rotary electric machine 20 is driven by a battery 4 (see FIG. 4) provided in the straddled vehicle, to apply a force for rotating the crankshaft 15. For example, the permanent magnet type rotary electric machine 20 can be driven by the battery 4 to apply a braking force which is a force in the direction opposite to the rotation direction of the crankshaft 15.

Here, referring to FIG. 3, a description is given of arrangement of the detection object parts 38 of the rotor 30. In this embodiment, the plurality of detection object parts 38 are provided on the outer surface of the rotor 30. The rotor position detection device 50 is provided at a position allowed to be opposed to the plurality of detection object parts 38. The rotor position detection device 50 is provided at a position allowed to be opposed to each of the plurality of detection object parts 38 during rotation of the rotor 30. The rotor position detection device 50 is not simultaneously opposed to the plurality of detection object parts 38, but is opposed to one after another of the plurality of detection object parts 38.

The detection object parts 38 are provided at angular intervals of 30 degrees on the outer surface of the outer rotor 30. In FIG. 3, the dashed and dotted lines indicate the angular intervals at which the detection object parts 38 are provided. The angle formed by adjacent ones of the detection object parts 38 is referred to as a measurement angle θ. In this embodiment, the measurement angle θ is 30 degrees.

Each time the rotor 30 rotates through the measurement angle, the rotor position detection device 50 detects each of the plurality of detection object parts 38. Upon detecting each detection object part 38, the rotor position detection device 50 outputs a detection signal.

In this embodiment, the plurality of detection object parts 38 have the same positional relationship relative to corresponding magnetic pole face pairs 37p.

In this embodiment, the rotor 30 is provided with eleven detection object parts 38. The eleven detection object parts 38 are respectively provided at eleven of the twelve positions specified at intervals corresponding to the measurement angle in the rotor 30.

The plurality of detection object parts 38 are arranged at equal intervals or substantially equal intervals with respect to the circumferential direction of the crankshaft 15. Among the positions arranged at intervals corresponding to the measurement angle, a position (blank position "5") has no detection object part 38 provided thereat. The angular interval between two detection object parts 38 (for example, "4" and "6") arranged at two positions adjacent to the blank position with respect to the circumferential direction is twice the angular interval between any of the other detection object parts 38. Since one of the intervals of the plurality of detection object parts 38 is different from the others, a reference position in one rotation of the crankshaft 15 can be detected.

FIG. 4 is a block diagram outlining an electrical configuration of a straddled vehicle including the engine unit.

The engine unit EU includes an inverter 61. A control device 60 controls components of the straddled vehicle 1 including the inverter 61.

The permanent magnet type rotary electric machine 20 and the battery 4 are connected to the inverter 61. The battery 4 is supplied with a current from the permanent magnet type rotary electric machine 20. The battery 4 is charged with power generated by the permanent magnet type rotary electric machine 20.

The battery 4 is connected to the inverter 61 via a main switch 5.

The inverter 61 includes a plurality of switching parts 611 to 616. In this embodiment, the inverter 61 includes six switching parts 611 to 616.

The switching parts 611 to 616 constitute a three-phase bridge inverter. The stator windings W are connected to the switching parts 611 to 616. The plurality of switching parts 6 11 to 616 are connected to the respective phases of the multi-phase stator windings W. More specifically, among the plurality of switching parts 611 to 616, every two switching parts that are connected in series constitute a half bridge. The half bridge corresponding to each phase is connected in parallel with the battery 4. Ones of the switching parts 611 to 616 constituting the half bridge of each phase are connected to the corresponding phase of the multi-phase stator windings W.

The switching parts 611 to 616 selectively allow or block the passing of a current between the multi-phase stator windings W and the battery 4.

In more detail, when the permanent magnet type rotary electric machine 20 functions as a motor, switching between causing and stopping conduction of the multi-phase stator windings W is implemented by on/off-operation of the switching parts 611 to 616.

When the permanent magnet type rotary electric machine 20 functions as a generator, switching between allowing and blocking the passing of a current between each of the stator windings W and the battery 4 is implemented by on/off-operation of the switching parts 611 to 616. By switching on/off the switching parts 611 to 616 one after another, a control of a voltage and a rectification of a three-phase AC outputted from the permanent magnet type rotary electric machine 20 are performed. The switching parts 611 to 616 control a current outputted from the permanent magnet type rotary electric machine 20 to the battery 4 and a power consuming apparatus.

Each of the switching parts 611 to 616 has a switching element. The switching element is, for example, a transistor and in more detail, an FET.

The fuel injector device 18, the spark plug 19, and the battery 4 are connected to the control device 60.

The control device 60 includes a rotary electric machine control unit 62 and a combustion control unit 63.

The combustion control unit 63 of the control device 60 controls the engine body 10. The rotary electric machine control unit 62 controls the permanent magnet type rotary electric machine 20. The rotary electric machine control unit 62 controls the inverter 61.

The combustion control unit 63 controls the combustion operation of the engine body 10. The combustion control unit 63 controls the combustion operation of the engine body 10, to control rotational power to be outputted from the engine body 10. The combustion control unit 63 controls the spark plug 19 and the fuel injector device 18, to control rotational power to be outputted from the engine body 10.

The rotary electric machine control unit 62 controls the plurality of switching parts 611 to 616 included in the inverter 61, to control a current flowing between the battery 4 and the permanent magnet type rotary electric machine 20. The rotary electric machine control unit 62 controls on/off-operation of each of the switching parts 611 to 616, to control the operation of the permanent magnet type rotary electric machine 20. The rotary electric machine control unit 62 includes a start control unit 621, a power generation control unit 622, and a stopping control unit 623.

The control device 60 is composed of a computer including a central processing unit (not shown) and a storage device 64. The central processing unit executes arithmetic processing based on a control program. The storage device 64 stores data relating to programs and arithmetic operations.

The combustion control unit 63 and the rotary electric machine control unit 62 including the start control unit 621, the power generation control unit 622, and the stopping control unit 623 are implemented by a computer (not shown) and a control program executable by the computer. Thus, below-described operations performed respectively by the combustion control unit 63 and the rotary electric machine control unit 62 including the start control unit 621, the power generation control unit 622, and the stopping control unit 623 can be considered as operations performed by the control device 60.

A starter switch 6 is connected to the control device 60. The starter switch 6 is actuated by a rider at a time of starting the engine body 10. The main switch 5 supplies power to the control device 60 in accordance with operations performed by the rider.

### [Operation of Engine Unit]

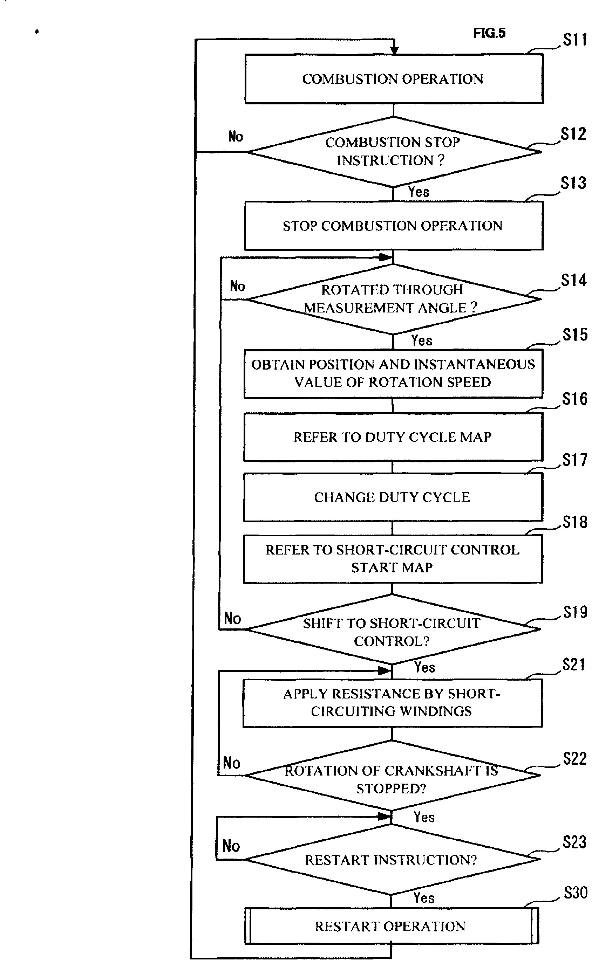

FIG. 5 is a flowchart illustrating operations of the engine unit EU shown in FIG. 1.

A stop operation of the engine unit EU described below is started when the engine unit EU is in a combustion operation state (511).

The combustion operation state includes, for example, an idling state. The idling state means, for example, a state where the straddled vehicle 1 (see FIG. 12) is stopped while the engine body 10 is operating. The combustion operation state includes, for example, a state where the straddled vehicle 1 is running and the engine body 10 is operating. In the combustion operation state, the combustion control unit 63 operates the engine body 10.

While the engine body 10 is in the combustion operation state (S11); if no combustion stop instruction is received (S12:No), the control device 60 continues the combustion operation.

If a combustion stop instruction is received (S12:Yes), the control device CT stops the engine combustion (S13). To be exact, the combustion control unit 63 stops the engine combustion. The combustion stop instruction may be an internal instruction generated by the control device CT. For example, the combustion stop instruction is an instruction generated upon fulfillment of an idling stop condition. In an alternative example, the combustion stop instruction may be an external instruction inputted by the rider.

After the combustion operation of the engine body 10 is stopped, the crankshaft 15 continues rotating by inertia. The rotation of the crankshaft 15 is detected by the rotor position detection device 50.

After the combustion operation of the engine body 10 is stopped, the control device CT performs a stop control (S14 to S22) for a period during which the crankshaft 15 continues forward rotation until the forward rotation of the crankshaft 15 is stopped. The control device CT starts the stop control after the combustion operation is stopped. More specifically, after the combustion operation of the engine body 10, which is performed by the combustion control unit 63, is stopped, the stopping control unit 623 of the rotary electric machine control unit 62 performs the stop control for a period during which the crankshaft 15 continues forward rotation until the forward rotation of the crankshaft 15 is stopped. In the stop control, the control device CT controls the plurality of switching parts 611 to 616 such that the permanent magnet type rotary electric machine 20 applies a braking force to the forward rotation of the crankshaft 15.

The stopping control unit 623 determines whether or not the crankshaft 15 is rotated through the measurement angle (S14). Based on detection of the detection object part 38 (see FIG. 4) by the rotor position detection device 50, the stopping control unit 623 determines that the crankshaft 15 is rotated through the measurement angle.

Upon determining that the crankshaft 15 is rotated through the measurement angle (S14:Yes), the stopping control unit 623 obtains the position of the crankshaft 15 and the instantaneous value of the rotation speed of the crankshaft 15 at that position (S15). Each time the crankshaft 15 is rotated through the measurement angle, the stopping control unit 623 obtains the position of the crankshaft 15 and the instantaneous value of the rotation speed of the crankshaft 15.

The stopping control unit 623 obtains the position of the crankshaft 15 by adding one to a counted number which indicates the position of the crankshaft 15. The position of the crankshaft 15 is represented as the number of times the detection object part 38 is detected. The position of the crankshaft 15 is represented as a number ranging from 0 to 23 which corresponds to two rotations of the crankshaft 15. Upon detection of the blank position (e.g., "17") of the detection object parts 38, the number indicating the position of the crankshaft 15 is updated into a value (e.g., "19") that is preset to be adopted upon detection of the blank position. For example, based on the fact that the rotation position of a cam (not shown) provided in the engine body 10 or air pressure in an intake path (not shown) satisfies a predetermined condition, the number indicating the position of the crankshaft 15 is updated into a value that is preset to be adopted upon satisfaction of the predetermined condition.

As the instantaneous value of the rotation speed of the crankshaft 15, the stopping control unit 623 obtains the rotation speed of the crankshaft 15 during its rotation through the measurement angle. The stopping control unit 623 calculates the instantaneous value of the rotation speed based on, for example, a time interval between a timing of previous detection of the detection object part 38 and a timing of current detection of the detection object part 38.

In this manner, each time the crankshaft 15 is rotated through the measurement angle θ, the control device CT obtains the position of the crankshaft 15 and the instantaneous value of the rotation speed of the crankshaft 15 at that position.

The stopping control unit 623 of the control device CT changes the braking force based on both the position of the crankshaft 15 and the instantaneous value of the rotation speed of the crankshaft 15 at that position (S16, S17).

The control device CT of this embodiment applies a braking force to the crankshaft 15 by sequentially performing two types of controls, namely, driving with sinusoidal current supply and short-circuiting the windings.

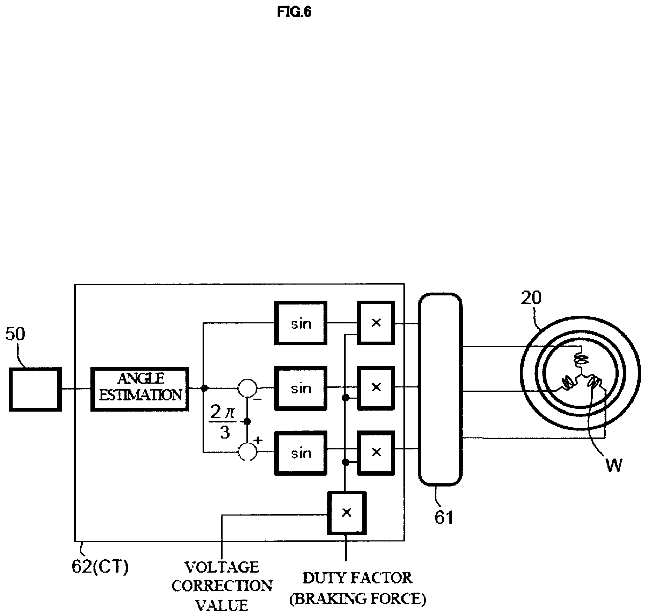

FIG. 6 is a block diagram summarizing processing performed in the driving with sinusoidal current supply.

In the driving with sinusoidal current supply, the switching parts 611 to 616 of the inverter 61 (see FIG. 4) are controlled such that a sinusoidal current flows through the stator windings W. The stopping control unit 623 of the control device CT controls the switching parts 611 to 616 of the inverter 61 with a pulse-width-modulated, three-phase sinusoidal wave signal.

As shown in FIG. 6, the stopping control unit 623 estimates an electrical angle for generating the sinusoidal wave, based on a result of detection performed by the rotor position detection device 50. The electrical angle means an angle based on the assumption that the angle per the magnetic pole face pair 37p (see FIG. 3), which is made up of the permanent magnets of the permanent magnet part 37, is 360°.

The stopping control unit 623 controls the switching parts 611 to 616 such that a current is supplied from the positive electrode of the battery 4 to the permanent magnet type rotary electric machine 20. To be specific, the stopping control unit 623 performs offset adjustment on the estimated value of the electrical angle such that a maximum value of an induced voltage generated in the stator winding W is less than the voltage of the battery 4. As a result, a braking force is applied to forward rotation of the crankshaft 15 while a current is supplied from the positive electrode of the battery 4 to the permanent magnet type rotary electric machine 20. At this time, the power of the battery 4 is supplied to the permanent magnet type rotary electric machine 20.

The control based on the driving with sinusoidal current supply is a power consumption control which consumes the power of the battery 4. Hereinafter, the driving with sinusoidal current supply is also referred to as the power consumption control.

The rotary electric machine control unit 62 outputs a PWM signal whose duty cycle is equal to the product of a sine value corresponding to the estimated electrical angle and a duty factor which represents the braking force. With the PWM signal, the switching parts 611 to 616 of the inverter 61 are switched on and off. As a consequence, a sinusoidal voltage is applied to the stator windings W. Use of the value that is out of phase with the electrical angle results in output of a PWM signal corresponding to another phase.

The duty factor controls the duty cycle throughout the entire PWM signal. The duty factor may take a value ranging from 0% to 100%, for example. In a case of the duty factor being 0% for example, the output is 0. In this case, the braking force applied by the permanent magnet type rotary electric machine 20 is 0. In a case of the duty factor being 100% for example, the output is maximum. In this case, the braking force applied by the permanent magnet type rotary electric machine 20 is at the maximum in a settable range.

In the power consumption control (driving with sinusoidal current supply), the control device CT refers to change data based on the position of the crankshaft 15 and the instantaneous value of the rotation speed of the crankshaft 15 at that position.

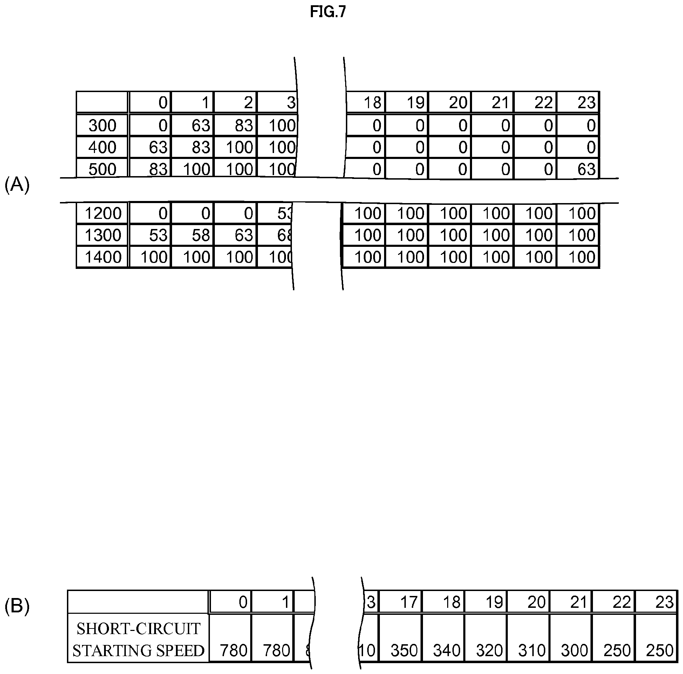

FIG. 7(A) shows a map serving as change data in the power consumption control. The FIG. 7(A) shows a part of the map. The map includes a correspondence relationship of an operation timing condition of the switching parts 611 to 616 relative to a position of the crankshaft 15 and the instantaneous value of the rotation speed of the crankshaft 15 at that position. The map includes a plurality of correspondence relationships.

In the map, the top row indicates positions of the crankshaft 15 in the form of the numbers assigned to the respective detection object parts 38. The positions indicated in the top row are positions that the crankshaft 15 takes during one combustion cycle of the engine body 10 which corresponds to four strokes. The value "0" indicates the compression top dead center. The value "1" indicates the position 30 degrees, which is the measurement angle, ahead of the compression top dead center. The value "2" indicates the position 60 degrees ahead of the compression top dead center.

In the map, the first column indicates the rotation speed of the crankshaft 15. The other cells of the map show the duty factor in the power consumption control. A greater value of the map causes output of a stronger braking force. For example, when the crankshaft position is 0 and the rotation speed is 1300 rpm, the obtained duty factor is 53. The duty factor represents the magnitude of the braking force. That is, the map shown in FIG. 7(A) indicates a correspondence relationship of the magnitude of the braking force relative to a position of the crankshaft 15 and the instantaneous value of the rotation speed of the crankshaft 15 at that position.

The map shown in FIG. 7(A), which serves as the change data, is prestored in the storage device 64. The map indicates a braking force for making the crankshaft 15 stop at a position in a target region. Each value in the map is set based on a result of actual measurement or simulation.

In step S16 mentioned above, the stopping control unit 623 obtains the duty factor by referring to the change data map based on a position of the crankshaft 15 and the instantaneous value of the rotation speed of the crankshaft 15 at that position.

In step S16, moreover, the stopping control unit 623 corrects the duty factor in accordance with the voltage of the battery 4. The stopping control unit 623 performs such a correction that the duty factor applied to the switching parts 611 to 616 is greater as the voltage of the battery 4 is lower.

To be specific, the stopping control unit 623 controls the operation timing of the switching parts 611 to 616 based on the product of the duty factor that is obtained with reference to the map and a voltage correction value that corresponds to the battery voltage. For a lower voltage of the battery 4, a greater value is set as the voltage correction value. The storage device 64 stores a correction map that associates the voltage of the battery 4 with the voltage correction value. In the correction map, for example, the voltage correction value is set to "1" in association with a voltage of the battery 4 being 10% lower than a standard voltage. The voltage correction value is set to "0.9" in association with the standard voltage of the battery 4. The voltage correction value is set to "0.85" in association with a voltage of the battery 4 being 10% higher than the standard voltage.

The control device CT refers to the correction map, to obtain the voltage correction value associated with the voltage of the battery 4. The voltage correction value may also be obtained by, for example, calculating an expression for compensating for the battery voltage. A correction is made in accordance with the voltage of the battery 4, so that a current to be supplied from the battery 4 to the permanent magnet type rotary electric machine 20 is controlled. In this manner, an influence of the state of the battery 4 on the braking force is suppressed.

In step S17, the stopping control unit 623 changes the duty cycle of the power consumption control based on the obtained duty factor. The control device CT changes the braking force by changing the operation timing of the plurality of switching parts 611 to 616 based on the duty factor that is obtained with reference to the map.

Then, the stopping control unit 623 refers to a short-circuit control start map (see FIG. 7(B)) (SI8). The stopping control unit 623 identifies a condition for starting a short-circuit control (S19).

If the condition for starting the short-circuit control is not fulfilled (S19:No), the stopping control unit 623 continues the above-described processing starting from step S14. That is, each time the crankshaft 15 is rotated through the measurement angle (S14:Yes), the stopping control unit 623 changes the operation timing of the switching parts 611 to 616 based on both a position of the crankshaft 15 and the instantaneous value of the rotation speed of the crankshaft 15 at that position. Thus, the braking force is changed each time the crankshaft 15 is rotated through the measurement angle (S14:Yes).

The control device CT changes the operation timing of the switching parts 611 to 616 at a plurality of positions in one combustion cycle.

The control device CT changes the operation timing of the switching parts 611 to 616 on a real time basis. The control device CT therefore changes the operation timing of the switching parts 611 to 616 before the crankshaft 15 is rotated through the measurement angle.

If the condition for starting the short-circuit control is fulfilled (S19:Yes), the control device CT starts the short-circuit control (S21). During the stop control which is the power consumption control, the control device CT starts the short-circuit control based on both a position of the crankshaft 15 and the instantaneous value of the rotation speed of the crankshaft 15 at that position.

FIG. 7(B) shows a short-circuit control start map.

The short-circuit control start map is stored in the storage device 64. The short-circuit control start map as well serves as change data.

The short-circuit control start map includes a plurality of correspondence relationships of a condition for starting the short-circuit control relative to a position of the crankshaft 15 and the instantaneous value of the rotation speed of the crankshaft 15 at that position. As the position of the crankshaft 15, a plurality of positions where the crankshaft sequentially locates during one combustion cycle of the engine body are stored in association with instantaneous values of the rotation speed. To be specific, positions 0 to 23 which correspond to two rotations of the crankshaft 15 are stored in association with instantaneous values of the rotation speed.

The condition for starting the short-circuit control is that the instantaneous value of the rotation speed of the crankshaft 15 at a certain position is equal to or less than a short-circuit starting speed associated with the certain position in the map shown in FIG. 7(B). Here, a condition for not starting the short-circuit control is that the condition for starting the short-circuit control is not fulfilled. In the short-circuit control start map, therefore, the condition for not starting the short-circuit control is omitted, and only the condition for starting the short-circuit control is specified.

The short-circuit control start map indicates values of the short-circuit starting speed, each of the values indicating the upper limit value of the speed that enables, as a result of the short-circuit control being started at a position corresponding to this short-circuit starting speed value, the crankshaft 15 to be stopped in a predetermined target region within the one combustion cycle. In this embodiment, the target region where the crankshaft 15 is to be stopped is set in either the expansion stroke or the exhaust stroke of the engine body 10. The control device CT performs the stop control such that the crankshaft 15 is stopped in either the expansion stroke or the exhaust stroke. Preferably, the target region is set in the expansion stroke of the engine body 10. In more detail, the target region is set between the position 30° ahead of the compression top dead center and the position 60° ahead of the compression top dead center.

In the short-circuit control start map shown in FIG. 7(B), the instantaneous value of the rotation speed corresponding to each position is a speed value that enables the crankshaft 15 to be stopped in the target region as a result of the short-circuit control.

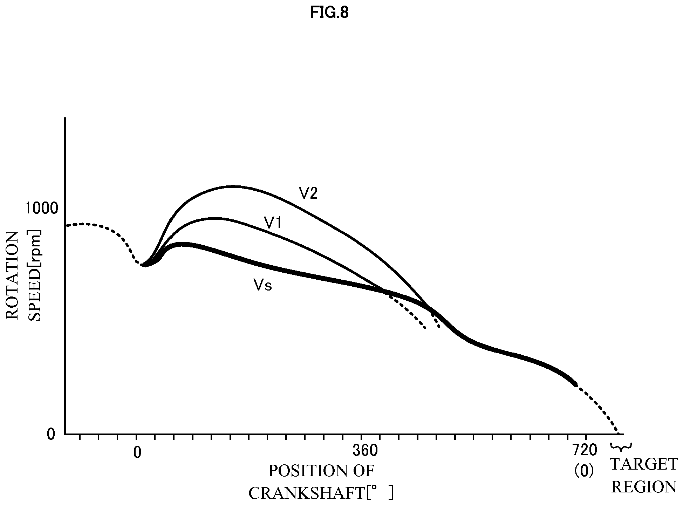

FIG. 8 is a graph showing an exemplary change in the rotation speed of the crankshaft 15 when the operation of the engine body 10 is stopped.

The horizontal axis of the graph represents the position of the crankshaft 15. The vertical axis represents the rotation speed. The thick line Vs indicates the rotation speed of the crankshaft 15 being stopped in the target region under the short-circuit control alone. A braking force applied under the short-circuit control is caused by an induced voltage of the stator windings W. Therefore, the higher the rotation speed is, the stronger the braking force is. The lower the rotation speed is, the weaker the braking force is. If the rotation speed of the crankshaft 15 at each position is lower than that indicated by the thick line Vs, the crankshaft 15 is able to stop in the target region under the short-circuit control.

In the map shown in FIG. 7(B), the positions and the rotation speeds indicated by the thick line Vs in the graph of FIG. 8 are set.

If, during the stop control which is the power consumption control in steps S15 to S17 mentioned above, the condition for starting the short-circuit control is fulfilled (S19:Yes), the control device CT starts the short-circuit control (S21). The condition for the control device CT to start the short-circuit control is based on both a position of the crankshaft 15 and the instantaneous value of the rotation speed of the crankshaft 15 at that position. The control device CT obtains the position of the crankshaft 15 and the instantaneous value of the rotation speed, each time the crankshaft 15 is rotated through the measurement angle. The control device CT identifies the condition for starting the short-circuit control, each time the crankshaft 15 is rotated through the measurement angle.

The control device CT starts the short-circuit control (S21) when the instantaneous value of the rotation speed is equal to or less than the short-circuit starting speed shown in the map of FIG. 7(B). The control device CT changes the operation timing of the switching parts 611 to 616 so as to short-circuit the stator windings W. To be specific, the control device CT brings the switching parts 612, 614, 616 into on-state.

The control device CT directs the switching parts to start the short-circuit control from, among the plurality of positions during one combustion cycle, a position at which the instantaneous value of the rotation speed of the crankshaft 15 is equal to or less than the short-circuit starting speed shown in the change data of FIG. 7(B).

The control device CT changes the operation timing of the switching parts 611 to 616 on a real time basis. That is, if the condition for starting the short-circuit control is fulfilled, the control device CT changes the operation timing of the switching parts 611 to 616 before the rotor position detection device 50 detects the next detection object part 38. The control device CT starts the short-circuit control (S21) at a time point when the rotation speed enabling the crankshaft 15 to be stopped in a target region within one combustion cycle is reached.

The short-circuit control (S21) is continued unless the rotation of the crankshaft is stopped (S22:No).

Upon stopping of the rotation of the crankshaft 15 (step S22:Yes), the control device CT waits for an input of a start instruction or a restart instruction (step S23).

The restart instruction is, for example, a restart condition after idling stop. The restart instruction is, for example, the rider's operation on the acceleration operator 8 (see FIG. 12). Alternatively, the restart instruction is actuation of the starter switch 6 (see FIG. 4).

Upon reception of the start instruction (step S23:Yes), the control device CT performs the restart operation (S30). The control device CT starts the engine body 10 by directing the permanent magnet type rotary electric machine 20 to rotate the crankshaft 15.

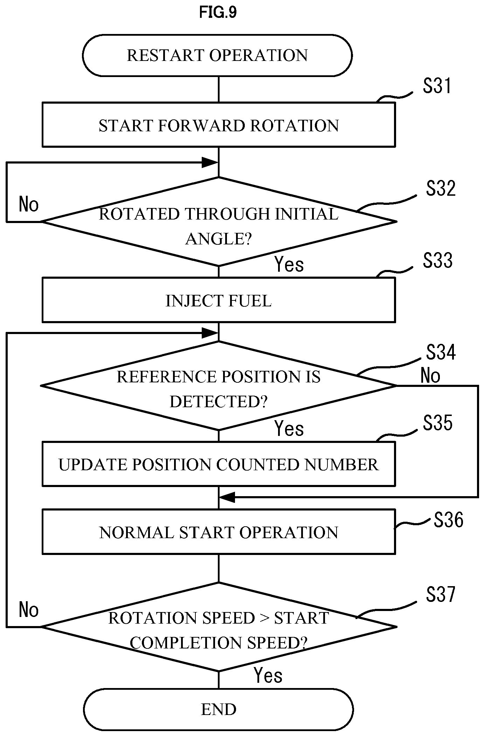

FIG. 9 is a flowchart illustrating the restart operation of the engine unit EU.

In the restart operation, the control device CT starts forward rotation of the crankshaft 15 (S31). The control device CT controls the switching parts 611 to 616 so as to direct the permanent magnet type rotary electric machine 20 to start forward rotation of the crankshaft 15. In this manner, forward rotation of the crankshaft 15 is started in accordance with reception of the start instruction.

When starting forward rotation of the crankshaft 15, the control device CT performs on/off-operation of the plurality of switching parts 611 to 616 at predefined timings. If the rotor position detection device 50 detects passing of the detection object parts 38 after the forward rotation of the crankshaft 15 is started, the control device CT performs on/off-operation of the switching parts 611 to 616 based on timings of passing of the detection object parts 38.

In the restart operation, the control device CT counts the rotation angle after the crankshaft 15 starts rotation. The control device CT continues counting the rotation angle of the crankshaft 15 over both a period of performing on/off-operation of the switching parts 611 to 616 at predefined timings and a period of performing on/off-operation of the switching parts 611 to 616 based on timings of passing of the detection object parts 38.

Upon rotation of an initial angle after the crankshaft 15 starts rotation (S32:Yes), the control device CT injects the fuel (S33).

The initial angle is a certain predefined angle. The initial angle is set equal to or less than the angle through which the crankshaft 15 is rotated from the compression top dead center of the engine body 10 to a position where the intake valve IV (see FIG. 1) is closed. That is, the initial angle is set equal to or less than an angle in the rotation angle of the crankshaft 15 from the compression top dead center to the position where the intake valve IV is closed.

More specifically, the initial angle of this embodiment is set to the angle through which the crankshaft 15 is rotated from a middle of the expansion stroke to a position where the intake valve IV (see FIG. 1) is opened.

Then, the control device CT determines whether or not the reference position of the crankshaft 15 is detected (S34). The reference position of the crankshaft 15 is the position (blank position) where no detection object part 38 is arranged. In FIG. 3 showing the detection object parts 38, the positions assigned "5" and "17" are the blank positions.

Upon detection of the reference position of the crankshaft 15 (S34:Yes), the control device CT updates the position counted number of the crankshaft 15 based on a timing of detection of the reference position (S35). The reference position of the crankshaft 15 serves as a criterion indicating the precise position of the crankshaft 15. After the position counted number of the crankshaft 15 is updated based on detection of the reference position, the engine body 10 is controlled precisely in accordance with the precise position of the crankshaft 15.

If the reference position of the crankshaft 15 is not detected (S34:No), the position counted number is not updated (S35).

The control device CT performs a normal start operation (S36). In the normal start operation, the control device CT operates the fuel injector device 18 and the spark plug 19 in accordance with the position of the crankshaft 15 corresponding to the counted number.

If the rotation speed of the crankshaft 15 is higher than a start completion speed (S37:Yes), the control device CT terminates the restart operation. If the rotation speed of the crankshaft 15 is equal to or less than the start completion speed (S37:No), the control device CT continues the normal start operation.

Referring to FIG. 8 again, how the crankshaft 15 behaves after the combustion operation is stopped is described.

In FIG. 8, the thin lines V1 and V2 indicate exemplary rotation speeds of the crankshaft 15 after the combustion operation is stopped.

In FIG. 8, the rotation speeds V1, V2 represent rotation speeds obtained in a case where, after combustion is caused when the crankshaft 15 is passing near the compression top dead center (0 degrees), the combustion operation is stopped and the stop control which is the power consumption control is started.

A combustion state of the engine body 10 varies in each combustion. The rotation speed V1 and the rotation speed V2 are two examples obtained in different combustion states.

In the power consumption control (S14 to S17), the control device CT of this embodiment changes the operation timing of the switching parts 611 to 616 based on both a position of the crankshaft 15 and the instantaneous value of the rotation speed of the crankshaft 15 at that position. Thus, a braking force to be applied by the permanent magnet type rotary electric machine 20 is changed.

In more detail, each time the crankshaft 15 is rotated through the measurement angle, the control device CT changes the operation timing of the switching parts 611 to 616 based on both a position of the crankshaft 15 and the instantaneous value of the rotation speed of the crankshaft 15 at that position.

A position of the crankshaft 15 and the instantaneous value of the rotation speed at that position directly and precisely represent the state of the engine body 10. For example, in FIG. 8, at a position after the combustion, that is, at a position immediately after the peak of the rotation speed, the crankshaft 15 with the rotation speed V2 has a greater rotational energy than the crankshaft 15 with the rotation speed V1 does.

A braking force in the power consumption control (S14 to S17) is, for example, changed in accordance with the braking force (duty factor) that is obtained with reference to the map shown in FIG. 7(A) and based on the aforementioned position. In the map which is referred to in the power consumption control, the braking force is set to "0" for a rotation speed that enables the crankshaft 15 to be stopped in a target region without any braking force. A stronger braking force is set for a higher rotation speed. This can suppress a difference in the stop position of the crankshaft 15 between the two cases where the rotation speed at a time of combustion is V1, V2.

The control device CT of this embodiment refers to the change data map including the plurality of correspondence relationships shown in FIG. 7(A), and changes the braking force. In each of the plurality of positions, the control device CT refers to the change data based on the position of the crankshaft 15 and the instantaneous value of the rotation speed, to identify a condition concerning a change of the braking force. Each time the crankshaft 15 is rotated through 30° which is the measurement angle θ, the control device CT refers to the change data based on the position of the crankshaft 15 and the instantaneous value of the rotation speed, to identify a condition concerning a change of the braking force.

Accordingly, a difference in the stop position of the crankshaft 15 between the cases of V1, V2 is suppressed. That is, a variation in the stop position of the crankshaft 15 is suppressed.

The control device CT starts the short-circuit control (S21) in which the stator windings W are short-circuited so that a braking force is applied to forward rotation of the crankshaft 15, based on both a position of the crankshaft 15 and the instantaneous value of the rotation speed at that position.

To be specific, each time the crankshaft 15 is rotated through the measurement angle θ, the control device CT refers to the short-circuit control start map of FIG. 7(B) based on both a position of the crankshaft 15 and the instantaneous value of the rotation speed at that position. Then, at a position where the instantaneous value of the rotation speed of the crankshaft 15 becomes equal to or less than the instantaneous value indicated in the short-circuit control start map, the control device CT starts the short-circuit control. For example, the short-circuit control is started at a position where each of the rotation speeds V1, V2 intersects the rotation speed Vs in the graph of FIG. 8. Thus, even when different rotation speeds such as V1, V2 of FIG. 8 may be exerted at the same position, the short-circuit control is started under a condition of the position and rotation speed that are suitable for making the crankshaft 15 stop in the target region. As a result, a variation in the stop position of the crankshaft 15 is suppressed.

In the stop control, the power consumption control is switched to the short-circuit control. In this embodiment, the rotor position detection device 50 includes the pick-up coil, and therefore the detection accuracy of the position of the crankshaft 15 deteriorates as the rotation speed of the crankshaft 15 decreases. A deterioration in the position detection accuracy leads to a deterioration in the accuracy of the braking force applied by the power consumption control. In such a case, a braking force is applied by the short-circuit control. Accordingly, a variation in the stop position of the crankshaft is suppressed.

In this embodiment, the operation timing of the switching parts 611 to 616 is changed from the operation timing according to the power consumption control to the timing according to the short-circuit control, based on both a position of the crankshaft 15 and the instantaneous value of the rotation speed at that position during rotation of the crankshaft 15 in the intake stroke.

At the target position, the crankshaft 15 reaches the high-load region, and therefore the rotation speed of the crankshaft 15 tends to decrease rapidly. The decrease in the rotation speed is likely to cause a deterioration in the detection accuracy of the speed of the crankshaft 15 and the control accuracy of the braking force under the power consumption control. Since the operation timing is changed while the crankshaft 15 is rotating in the intake stroke, the strength of braking force is changed to an appropriate value under a state where the control accuracy of the braking force is high. Here, not only the intake stroke but also the compression stroke may be included in a range where the operation timing of the switching parts 611 to 616 is switched.

In this embodiment, the crankshaft 15 is stopped in a set target region with a variation suppressed.

In this embodiment, for example, even though there is a variation in the rotation speed immediately after the combustion is stopped, a variation in the stop position of the crankshaft 15 is suppressed. In this embodiment, moreover, even though there is a variation in the position where the short-circuit control is started, a variation in the stop position of the crankshaft 15 is suppressed.

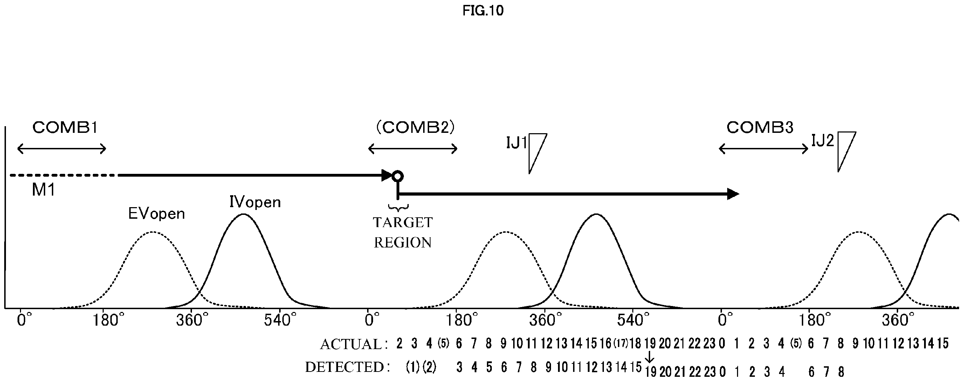

The target region where the crankshaft 15 is to be stopped is set in the intake stroke, for example. In this case, driving the crankshaft 15 in forward rotation for restart suffers a low rotational load. As a result, the restart is made for a shortened time period after the combustion operation of the engine body 10 is stopped. Referring to an example shown in FIG. 10, when the crankshaft 15 starts rotation in the target region, a long run-up zone is ensured until the high-load region which exists at the compression top dead center (0°).

### [Start Operation]

FIG. 10 is a graph schematically showing the relationship between the position of the crankshaft 15 and an event of the engine body 10.

In FIG. 10, the horizontal axis of the graph represents the position of the crankshaft 15. The position of the crankshaft 15 is indicated on a 720 degrees basis which corresponds to one combustion cycle. The vertical axis represents, as one event, the degree of opening of the valve. The straight line M1 indicates motion of the crankshaft 15. Time periods COMB 1 to COMB3 correspond to the combustion stroke. In the time period COMB2, actual combustion does not occur.

In the example shown in FIG. 10, the control device CT performs the stop control after completion of the combustion in COMB1. The control device CT changes the braking force during the stop control, based on both a position of the crankshaft 15 and the instantaneous value of the rotation speed at that position. In this manner, the control device CT is able to make the crankshaft 15 stop in the target region. In the example shown in FIG. 10, the target region is set in the combustion stroke COMB2. More specifically, the target region where the crankshaft 15 is to be stopped is a region corresponding to the detection object part assigned "2".

If a restart instruction is received while the crankshaft 15 is stopped (S23:Yes in FIG. 5), the control device CT starts forward rotation of the crankshaft 15 (S31 in FIG. 9). At every start of forward rotation, the control device CT counts the position of the crankshaft 15 from "1" which is the initial value. In FIG. 10, the "DETECTED" row indicates the position of the crankshaft 15 counted by the control device CT. The "ACTUAL" row indicates the actual position of the crankshaft 15.

The reason why the counting is started from the initial value "1" is because the possibility that the control device CT may be powered off due to stopping of the crankshaft 15 while the crankshaft 15 is stopped and the possibility that the crankshaft 15 may be rotated by an external force while the crankshaft 15 is stopped are considered.

As a result, there is a gap between the "ACTUAL" numbers of the detection object parts 38 passing through the rotor position detection device 50 and the numbers of the detection object part 38 detected and counted by the control device CT.

The number indicating the position of the crankshaft 15 is updated when the rotor position detection device 50 detects the blank position where no detection object part 38 is arranged, that is, the position corresponding to "5" or "17". In the example shown in FIG. 10, the counted number is updated when the rotor position detection device 50 detects the blank position "17". At this time, the counted number is updated into "19" because detection of the blank position involves a delay.

In fact, it is possible that the counting after the start of forward rotation of the crankshaft 15 is based simply on on/off-operation of the switching parts 611 to 616. The rotation speed of the crankshaft 15, however, is low immediately after the start of forward rotation of the crankshaft 15. In some cases, therefore, the rotor position detection device 50 cannot detect the blank position where no detection object part 38 is arranged. In such a case, the number indicating the position of the crankshaft 15 is not updated.

For example, the "ACTUAL" blank position corresponding to "5" passes through the rotor position detection device 50. At this time point, however, the rotation speed of the crankshaft 15 is so low that the control device CT cannot detect the blank position. Thus, the first time the control device CT detects the blank position after the start of forward rotation of the crankshaft 15 is when the blank position corresponding to "17" passes through the rotor position detection device 50. In other words, it is not until the blank position corresponding to "17" passes through the rotor position detection device 50 that the control device CT detects the precise position of the crankshaft 15.

The combustion control unit 63 of the control device CT directs the fuel injector device 18 to supply the fuel so that combustion of the engine body 10 is caused. Supplying the fuel in a time period before the intake valve IV is closed prior to the combustion stroke leads to combustion in the combustion stroke.

In this embodiment, as has been described with reference to FIG. 9, upon rotation of the certain predefined initial angle after the crankshaft 15 starts rotation (S32:Yes), the control device CT injects the fuel (S33).

The initial angle is equal to or less than the angle through which the crankshaft 15 is rotated from the compression top dead center of the engine body 10 to the position where the intake valve IV is closed.

Accordingly, the control device CT directs the fuel injector device 18 to inject the fuel in a time period after the crankshaft 15 starts rotation and before the intake valve IV is closed. In the example shown in FIG. 10, the control device CT directs the fuel injector device 18 to inject the fuel at a timing 1J1.

This enables the engine body 10 to cause combustion in the combustion stroke COMB3 within one combustion cycle after the crankshaft 15 starts rotation.

For example, in a case where the control device injects the fuel after detecting the blank position corresponding to "17" and updating the counted number of position information, an actual combustion is performed in a combustion stroke of the next combustion cycle following the combustion stroke COMB3. This takes time before completion of start of the engine body 10 after the crankshaft 15 starts rotation.

In this respect, the control device CT of this embodiment directs the fuel injector device 18 to inject the fuel within the same combustion cycle as the combustion cycle including the stop position, even when update of counting based on detection of the blank position is not made. This makes it likely that, after the crankshaft 15 starts rotation, a fuel combustion occurs in the same combustion cycle as the combustion cycle including the stop position. In this embodiment, therefore, a time period until restart after stop of the combustion operation can be further shortened.

### [Second Embodiment]

Next, a second embodiment of the present teaching is described. In the following description of the second embodiment, elements corresponding to those of the first embodiment are given the same reference signs as those of the first embodiment, respectively, and differences from the above-described first embodiment are mainly described.

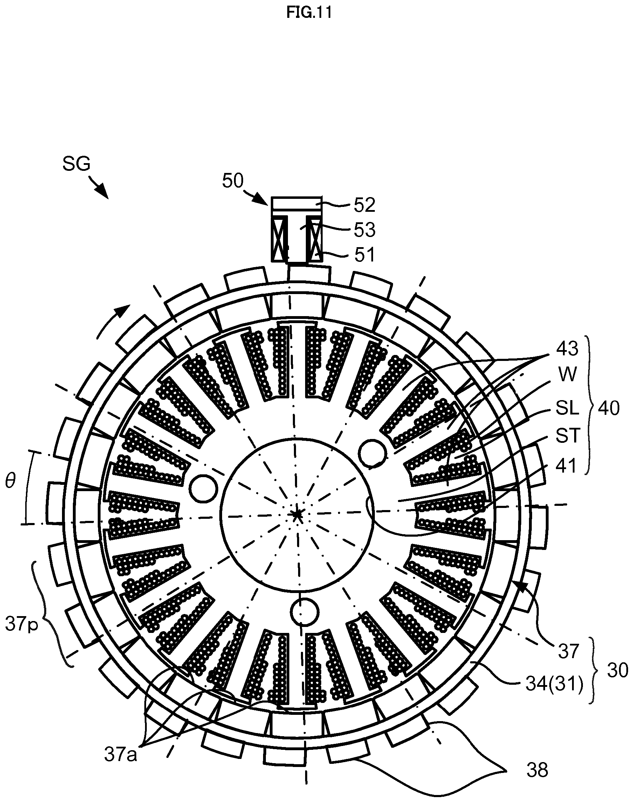

FIG. 11 is a cross-sectional view of a permanent magnet type rotary electric machine 20 according to the second embodiment, as sectioned perpendicular to its rotation axis line.

In the permanent magnet type rotary electric machine 20 shown in FIG. 11, the interval of detection object parts 38 is half the interval of the first embodiment shown in FIG. 3. In this embodiment, the measurement angle θ is 15°. Each time the crankshaft 15 is rotated through 15° which is the measurement angle θ, the control device CT refers to the change data based on the position of the crankshaft 15 and the instantaneous value of the rotation speed, to identify a condition concerning a change of the braking force.

This embodiment is able to control the stop position of the crankshaft more precisely. Accordingly, a variation in the stop position of the crankshaft can be further suppressed.

In this second embodiment, the measurement angle θ is 15°. In another example, the measurement angle may be 10°. The measurement angle can be set to 10° by, for example, setting the interval of the detection object parts 38 to 1/3 as compared with the first embodiment. The measurement angle θ can be set to 15 by, for example, providing three rotor position detection devices to the configuration of the first embodiment.

Alternatively, the measurement angle θ can be set to 15° by adopting three Hall ICs instead of pick-up coils as the rotor position detection devices.

### [Motorcycle]

FIG. 12 shows an external appearance of a straddled vehicle 1 equipped with the engine unit EU.

The straddled vehicle 1 shown in FIG. 12 includes the engine unit EU according to the first or second embodiment described above, a vehicle body 101, wheels 3a, 3b, and the battery 4. The engine unit EU mounted to the straddled vehicle 1 drives the wheel 3b which is a drive wheel, to rotate the wheel 3b so that the straddled vehicle 1 travels.

In the straddled vehicle 1 shown in FIG. 12, power required for rotating the crankshaft 15 for starting the engine body 10 of the engine unit EU is reduced. This makes it less necessary that, after the crankshaft is stopped, the crankshaft 15 is driven in reverse rotation to a position where the rotational load is low.

It should be understood that the terms and expressions used in the above embodiments are for descriptions and not to be construed in a limited manner, do not eliminate any equivalents of features shown and mentioned herein, and allow various modifications falling within scope of the present teaching as defined by the appended claims.

- 1: straddled vehicle
- EU: engine unit
- 10: four-stroke single-cylinder engine body
- 15: crankshaft
- 20: permanent magnet type rotary electric machine
- CT: control device
- 62: rotary electric machine control unit
- 63: combustion control unit
- 64: storage device
- 61: inverter
- 611 to 616: switching part

## Claims

1. A straddled vehicle (1) mounting an engine unit (EU) the engine unit (EU) comprising:
a four-stroke single-cylinder engine body (10) including one cylinder and a crankshaft (15), in which a high-load region (TH) and a low-load region (TL) occur during four strokes, the high-load region (TH) having a high load on rotation of the crankshaft (15), the low-load region (TL) having a lower load on rotation of the crankshaft (15) than that of the high-load region (TH);
a permanent magnet type rotary electric machine (20) including a permanent magnet, a rotor (30), and a stator (40), the rotor (30) connected to the crankshaft (15) so as to be rotatable with its speed ratio fixed relative to the crankshaft (15), the permanent magnet type rotary electric machine (20) configured to be driven by a battery (4) provided in the straddled vehicle (1) to apply a force to rotation of the crankshaft (15);
an inverter (61) including a plurality of switching parts (611 to 616), by which a current flowing between the battery (4) and the permanent magnet type rotary electric machine (20) is controlled; and
a control device (CT) including a rotary electric machine control unit (62) and a combustion control unit (63), the rotary electric machine control unit (62) configured to control the plurality of switching parts (611 to 616) included in the inverter (61) to control a current flowing between the battery (4) and the permanent magnet type rotary electric machine (20), the combustion control unit (63) configured to control a combustion operation of the four-stroke single-cylinder engine body (10),
wherein in at least a part of time during which the stop control is performed, the control device (CT) is configured to perform a stop control by a power consumption control of controlling the plurality of switching parts (611 to 616) such that a current is supplied from the battery (4) to the permanent magnet type rotary electric machine (20) to direct the permanent magnet type rotary electric machine (20) to apply a braking force to forward rotation of the crankshaft (15), in at least part of a time period during which the crankshaft (15) continues forward rotation after the four-stroke single-cylinder engine body (10) is configured to stop a combustion operation and until the crankshaft (15) is configured to stop the forward rotation,
the control device (CT) configured to change the braking force at least once during the stop control, by changing an operation timing of the plurality of switching parts (611 to 616) based at least on both a position of the crankshaft (15) and an instantaneous value of the rotation speed of the crankshaft (15) at the position.

2. A straddled vehicle (1) according to claim 1, wherein
the control device (CT) includes a storage device (64) that is configured to prestore change data including a plurality of correspondence relationships of a condition concerning an operation timing of the plurality of switching parts (611 to 616) relative to a position of the crankshaft (15) and an instantaneous value of the rotation speed of the crankshaft (15) at the position, and
when changing the braking force, the control device (CT) is configured to change the braking force by changing, on a real time basis, an operation timing of the plurality of switching parts (611 to 616) with reference to the change data based on a position of the crankshaft (15) and an instantaneous value of the rotation speed of the crankshaft (15) at the position.

3. A straddled vehicle (1) according to claim 2, wherein
in the power consumption control, the control device (CT) is configured to control a current to be supplied from the battery (4) to the permanent magnet type rotary electric machine (20), in accordance with a voltage of the battery (4).

4. A straddled vehicle (1) according to any one of claims 1 to 3, wherein
the permanent magnet type rotary electric machine (20) includes a winding that is electrically connected to the plurality of switching parts (611 to 616), and
during the stop control, the control device (CT) is configured to change the braking force by changing, on a real time basis, an operation timing of the plurality of switching parts (611 to 616) so as to start a short-circuit control in which the winding is short-circuited to apply a braking force to forward rotation of the crankshaft (15), based at least on both a position of the crankshaft (15) and an instantaneous value of the rotation speed of the crankshaft (15) at the position.

5. A straddled vehicle (1) according to claim 4, wherein
the control device (CT) includes a storage device (64) that is configured to prestore change data including a plurality of correspondence relationships of a condition concerning an operation timing of the plurality of switching parts (611 to 616) for starting the short-circuit control relative to a plurality of positions where the crankshaft (15) sequentially locates in one combustion cycle of the four-stroke single-cylinder engine body (10) and an instantaneous value of the rotation speed of the crankshaft (15) at each of the plurality of positions, the instantaneous value included in the change data being an upper limit value of the speed that enables, as a result of the short-circuit control being started at a position corresponding to the instantaneous value, the crankshaft (15) to be stopped in a predetermined target region within the one combustion cycle, and
when the instantaneous value of the rotation speed of the crankshaft (15) becomes equal to or less than an instantaneous value included in the change data, the control device (CT) directs the plurality of switching parts (611 to 616) to start the short-circuit control at, among the plurality of positions, a position corresponding to the instantaneous value included in the change data.

6. A straddled vehicle (1) according to any one of claims 1 to 5, wherein
each time the crankshaft (15) is rotated through a predefined measurement angle (θ), the control device (CT) is configured to obtain, as an instantaneous value of the rotation speed of the crankshaft (15), the rotation speed of the crankshaft (15) rotating through the measurement angle (θ).

7. A straddled vehicle (1) according to claim 6, wherein
the measurement angle (θ) is 30 degrees.

8. A straddled vehicle (1) according to claim 6, wherein
the measurement angle (θ) is 15 degrees.

9. A straddled vehicle (1) according to claim 6, wherein
the measurement angle (θ) is 10 degrees.

10. A straddled vehicle (1) according to any one of claims 1 to 9, wherein
the control device (CT) changes the braking force at least once during the stop control by changing, on a real time basis, an operation timing of the plurality of switching parts (611 to 616) based on both a position of the crankshaft (15) and an instantaneous value of the rotation speed of the crankshaft (15) at the position, such that the permanent magnet type rotary electric machine (20) is configured to direct the crankshaft (15) to stop rotation in either of an expansion stroke and an exhaust stroke of the four-stroke single-cylinder engine body (10).

11. A straddled vehicle (1) according to any one of claims 1 to 10, wherein
the control device (CT) is configured to change the braking force at least once during the stop control by changing, on a real time basis, an operation timing of the plurality of switching parts (611 to 616) based on both a position of the crankshaft (15) and an instantaneous value of the rotation speed of the crankshaft (15) at the position while the crankshaft (15) is rotating in either of an intake stroke and a compression stroke of the four-stroke single-cylinder engine body (10).

12. A straddled vehicle (1) according to any one of claims 1 to 11, wherein
the control device (CT) is configured to change the braking force at least once during the stop control by changing, on a real time basis, an operation timing of the plurality of switching parts (611 to 616) based on both a position of the crankshaft (15) and an instantaneous value of the rotation speed of the crankshaft (15) at the position while the crankshaft (15) is rotating in an intake stroke of the four-stroke single-cylinder engine body (10).

13. A straddled vehicle (1) according to any one of claims 1 to 12, wherein
the four-stroke single-cylinder engine body (10) includes a fuel injector device and an intake valve, and
the control device (CT) is configured to start rotation of the crankshaft (15) by controlling the plurality of switching parts (611 to 616) in response to reception of a start instruction, and then is configured to direct the fuel injector device to inject a fuel in response to the crankshaft (15) rotating through a certain predefined angle, the certain predefined angle being equal to or less than an angle from a compression top dead center to a position where the intake valve is closed in the four-stroke single-cylinder engine body (10).

## Patentansprüche

1. Ein Grätschsitzfahrzeug (1), anbringend eine Motoreinheit (EU), wobei die Motoreinheit (EU) umfasst:
einen Viertakt-Einzelzylinder-Motorkörper (10), der einen Zylinder und eine Kurbelwelle (15) beinhaltet, in dem eine Hochlastregion (TH) und eine Niedriglastregion (TL) während vier Takten auftreten, wobei die Hochlastregion (TH) eine Hochlast auf die Rotation der Kurbelwelle (15) aufweist, wobei die Niedriglastregion (TL) eine niedrigere Last auf die Rotation der Kurbelwelle (15) als die der Hochlastregion (TH) aufweist;
eine rotatorische elektrische Maschine vom Permanentmagnettyp (20), die einen Permanentmagneten, einen Rotor (30) und einen Stator (40) beinhaltet, der Rotor (30) ist mit der Kurbelwelle (15) verbunden, um mit seinem festen Drehzahlverhältnis relativ zu der Kurbelwelle (15) drehbar zu sein, die rotatorische elektrische Maschine vom Permanentmagnettyp (20) ist konfiguriert, von einer Batterie (4), die in dem Grätschsitzfahrzeug (1) vorgesehen ist, angetrieben zu werden, um eine Kraft auf die Rotation der Kurbelwelle (15) aufzubringen;
einen Inverter (61), der eine Vielzahl von Umschaltteilen (611 bis 616) beinhaltet, durch die ein zwischen der Batterie (4) und der rotatorischen elektrischen Maschine vom Permanentmagnettyp (20) fließender Strom gesteuert wird; und
eine Steuereinrichtung (CT), die eine Steuereinheit der rotatorischen elektrischen Maschine (62) und eine Verbrennungssteuereinheit (63) beinhaltet, die Steuereinheit der rotatorischen elektrischen Maschine (62) ist konfiguriert, die Vielzahl der Umschaltteile (611 bis 616), die in dem Inverter (61) beinhaltet sind, zu steuern, um einen zwischen der Batterie (4) und der rotatorischen elektrischen Maschine vom Permanentmagnettyp (20) fließenden Strom zu steuern, die Verbrennungssteuereinheit (63) ist konfiguriert, einen Verbrennungsbetrieb des Viertakt-Einzelzylinder-Motorkörpers (10) zu steuern,
wobei in zumindest einem Zeitabschnitt, während dessen die Stoppsteuerung durchgeführt wird, die Steuereinrichtung (CT) konfiguriert ist, eine Stoppsteuerung durch eine Leistungsverbrauchssteuerung von Steuern der Vielzahl von Umschaltteilen (611 bis 616) durchzuführen, sodass ein Strom von der Batterie (4) an die rotatorische elektrische Maschine vom Permanentmagnettyp (20) bereitgestellt wird, um die rotatorische elektrische Maschine vom Permanentmagnettyp (20) zu regeln, eine Bremskraft auf die Vorwärtsrotation der Kurbelwelle (15) aufzubringen, in zumindest einem Abschnitt einer Zeitperiode, während der die Kurbelwelle (15) mit der Vorwärtsrotation fortfährt, nachdem der Viertakt-Einzelzylinder-Motorkörper (10) konfiguriert ist, einen Verbrennungsbetrieb zu stoppen, und bis die Kurbelwelle (15) konfiguriert ist, die Vorwärtsrotation zu stoppen,
die Steuereinrichtung (CT) konfiguriert ist, die Bremskraft zumindest einmal während der Stoppsteuerung durch Ändern eines Betriebstimings der Vielzahl von Umschaltteilen (611 bis 616) basierend auf zumindest beiden von einer Position der Kurbelwelle (15) und einem momentanen Wert der Drehzahl der Kurbelwelle (15) an der Position zu ändern.

2. Ein Grätschsitzfahrzeug (1) nach Anspruch 1, wobei
die Steuereinrichtung (CT) eine Speichereinrichtung (64) beinhaltet, die konfiguriert ist, Änderungsdaten, beinhaltend eine Vielzahl von Entsprechungsbeziehungen einer Bedingung betreffend ein Betriebstiming der Vielzahl von Umschaltteilen (611 bis 616) bezüglich einer Position der Kurbelwelle (15) und eines momentanen Werts der Drehzahl der Kurbelwelle (15) an der Position vorzuspeichern, und
bei Änderung der Bremskraft die Steuereinrichtung (CT) konfiguriert ist, die Bremskraft durch Ändern, auf einer Echtzeitbasis, eines Betriebstimings der Vielzahl von Umschaltteilen (611 bis 616) unter Bezugnahme auf die Änderungsdaten basierend auf einer Position der Kurbelwelle (15) und einem momentanen Wert der Drehzahl der Kurbelwelle (15) an der Position zu ändern.

3. Ein Grätschsitzfahrzeug (1) nach Anspruch 2, wobei
in der Leistungsverbrauchssteuerung die Steuereinrichtung (CT) konfiguriert ist, einen von der Batterie (4) an die rotatorische elektrische Maschine vom Permanentmagnettyp (20) bereitzustellenden Strom im Einklang mit einer Spannung der Batterie (4) zu steuern.

4. Ein Grätschsitzfahrzeug (1) nach irgendeinem von Ansprüchen 1 bis 3, wobei
die rotatorische elektrische Maschine vom Permanentmagnettyp (20) eine Wicklung beinhaltet, die elektrisch mit der Vielzahl von Umschaltteilen (611 bis 616) verbunden ist, und während der Stoppsteuerung die Steuereinrichtung (CT) konfiguriert ist, die Bremskraft durch Ändern, auf einer Echtzeitbasis, eines Betriebstimings der Vielzahl von Umschaltteilen (611 bis 616) zu ändern, um eine Kurzschlusssteuerung zu starten, in der die Wicklung kurzgeschlossen wird, um eine Bremskraft auf die Vorwärtsrotation der Kurbelwelle (15) aufzubringen, basierend auf zumindest beiden von einer Position der Kurbelwelle (15) und einem momentanen Wert der Drehzahl der Kurbelwelle (15) an der Position.

5. Ein Grätschsitzfahrzeug (1) nach Anspruch 4, wobei
die Steuereinrichtung (CT) eine Speichereinrichtung (64) beinhaltet, die konfiguriert ist, Änderungsdaten, beinhaltend eine Vielzahl von Entsprechungsbeziehungen einer Bedingung betreffend ein Betriebstiming der Vielzahl von Umschaltteilen (611 bis 616) zum Starten der Kurzschlusssteuerung bezüglich einer Vielzahl von Positionen, an denen die Kurbelwelle (15) sequentiell in einem Verbrennungszyklus des Viertakt-Einzelzylinder-Motorkörpers (10) gelegen ist, und eines momentanen Werts der Drehzahl der Kurbelwelle (15) an jeder von der Vielzahl von Positionen vorzuspeichern, wobei der in den Änderungsdaten beinhaltete momentane Wert ein oberer Grenzwert der Drehzahl ist, der es ermöglicht, als ein Resultat der an einer Position entsprechend dem momentanen Wert gestarteten Kurzschlussteuerung, dass die Kurbelwelle (15) in einem vorgegebenen Zielbereich innerhalb des einen Verbrennungszyklus gestoppt wird, und
wenn der momentane Wert der Drehzahl der Kurbelwelle (15) gleich oder weniger als ein in den Änderungsdaten beinhalteter Wert wird, die Steuereinrichtung (CT) die Vielzahl von Umschaltteilen (611 bis 616) regelt, die Kurzschlussteuerung an einer Position unter der Vielzahl von Positionen entsprechend dem in den Änderungsdaten beinhalteten momentanen Wert zu starten.

6. Ein Grätschsitzfahrzeug (1) nach irgendeinem von Ansprüchen 1 bis 5, wobei
zu jeder Zeit, zu der die Kurbelwelle (15) durch einen vordefinierten Messwinkel (θ) rotiert wird, die Steuereinrichtung (CT) konfiguriert ist, die Drehzahl der durch den Messwinkel (θ) rotierenden Kurbelwelle (15) als einen momentanen Wert der Drehzahl der Kurbelwelle (15) zu erhalten.

7. Ein Grätschsitzfahrzeug (1) nach Anspruch 6, wobei
der Messwinkel (θ) 30 Grad ist.

8. Ein Grätschsitzfahrzeug (1) nach Anspruch 6, wobei
der Messwinkel (θ) 15 Grad ist.

9. Ein Grätschsitzfahrzeug (1) nach Anspruch 6, wobei
der Messwinkel (θ) 10 Grad ist.

10. Ein Grätschsitzfahrzeug (1) nach irgendeinem von Ansprüchen 1 bis 9, wobei
die Steuereinrichtung (CT) die Bremskraft zumindest einmal während der Stoppsteuerung durch Ändern, auf einer Echtzeitbasis, eines Betriebstimings der Vielzahl von Umschaltteilen (611 bis 616) basierend auf beiden von einer Position der Kurbelwelle (15) und einem momentanen Wert der Drehzahl der Kurbelwelle (15) an der Position ändert, sodass die rotatorische elektrische Maschine vom Permanentmagnettyp (20) konfiguriert ist, die Kurbelwelle (15) zu regeln, die Rotation in einem von einem Expansionstakt und einem Ausstoßtakt des Viertakt-Einzelzylinder-Motorkörpers (10) zu stoppen.

11. Ein Grätschsitzfahrzeug (1) nach irgendeinem von Ansprüchen 1 bis 10, wobei
die Steuereinrichtung (CT) konfiguriert ist, die Bremskraft zumindest einmal während der Stoppsteuerung durch Ändern, auf einer Echtzeitbasis, eines Betriebstimings der Vielzahl von Umschaltteilen (611 bis 616) basierend auf beiden von einer Position der Kurbelwelle (15) und einem momentanen Wert der Drehzahl der Kurbelwelle (15) an der Position zu ändern, während die Kurbelwelle (15) in einem von einem Einlasstakt und einem Kompressionstakt des Viertakt-Einzelzylinder-Motorkörpers (10) rotiert.

12. Ein Grätschsitzfahrzeug (1) nach irgendeinem von Ansprüchen 1 bis 11, wobei
die Steuereinrichtung (CT) konfiguriert ist, die Bremskraft zumindest einmal während der Stoppsteuerung durch Ändern, auf einer Echtzeitbasis, eines Betriebstimings der Vielzahl von Umschaltteilen (611 bis 616) basierend auf beiden von einer Position der Kurbelwelle (15) und einem momentanen Wert der Drehzahl der Kurbelwelle (15) an der Position zu ändern, während die Kurbelwelle (15) in einem Einlasstakt des Viertakt-Einzelzylinder-Motorkörpers (10) rotiert.

13. Ein Grätschsitzfahrzeug (1) nach irgendeinem von Ansprüchen 1 bis 12, wobei
der Viertakt-Einzelzylinder-Motorkörper (10) eine Kraftstoffinjektoreinrichtung und ein Einlassventil beinhaltet, und
die Steuereinrichtung (CT) konfigurier ist, Rotation der Kurbelwelle (15) durch Steuern der Vielzahl von Umschaltteilen (611 bis 616) in Erwiderung auf Empfang einer Startinstruktion zu starten, und dann konfiguriert ist, die Kraftstoffinjektoreinrichtung zu regeln, einen Kraftstoff in Erwiderung auf die durch einen bestimmten vordefinierten Winkel rotierende Kurbelwelle (15) einzuspritzen, wobei der bestimmte vordefinierte Winkel gleich oder weniger als ein Winkel von einem oberen Totpunkt der Kompression zu einer Position, an der das Einlassventil in dem Viertakt-Einzelzylinder-Motorkörper (10) geschlossen wird.

## Revendications

1. Véhicule à selle (1) pourvu d'un groupe moteur (EU), le groupe moteur (EU) comprenant :
un corps de moteur monocylindrique à quatre temps (10) comportant un cylindre et un vilebrequin (15), où une région à charge élevée (TH) et une région à faible charge (TL) se produisent pendant quatre temps, la région à charge élevée (TH) ayant une charge élevée lors de la rotation du vilebrequin (15), la région à faible charge (TL) ayant une charge inférieure lors de la rotation du vilebrequin (15) à celle de la région à charge élevée (TH) ;
une machine électrique tournante de type à aimant permanent (20) comportant un aimant permanent, un rotor (30) et un stator (40), le rotor (30) étant relié au vilebrequin (15) de manière à pouvoir tourner avec son rapport de vitesse fixe par rapport au vilebrequin (15), la machine électrique tournante de type à aimant permanent (20) étant configurée pour être entraînée par une batterie (4) prévue dans le véhicule à selle (1) pour appliquer une force à la rotation du vilebrequin (15) ;
un onduleur (61) comportant une pluralité de parties de commutation (611 à 616), par lesquelles un courant circulant entre la batterie (4) et la machine électrique tournante de type à aimant permanent (20) est commandé ; et
un dispositif de commande (CT) comportant une unité de commande de machine électrique tournante (62) et une unité de commande de combustion (63), l'unité de commande de machine électrique tournante (62) étant configurée pour commander la pluralité de parties de commutation (611 à 616) incluses dans l'onduleur (61) pour commander un courant circulant entre la batterie (4) et la machine électrique tournante de type à aimant permanent (20), l'unité de commande de combustion (63) étant configurée pour commander une opération de combustion du corps de moteur monocylindrique à quatre temps (10),
dans lequel, dans au moins une partie du temps pendant lequel la commande d'arrêt est effectuée, le dispositif de commande (CT) est configuré pour effectuer une commande d'arrêt par une commande de consommation d'énergie consistant à commander la pluralité de parties de commutation (611 à 616) de sorte qu'un courant soit fourni de la batterie (4) à la machine électrique tournante de type à aimant permanent (20) pour amener la machine électrique tournante de type à aimant permanent (20) à appliquer une force de freinage à la rotation vers l'avant du vilebrequin (15), dans au moins une partie d'une période de temps pendant laquelle le vilebrequin (15) continue une rotation vers l'avant après que le corps de moteur monocylindrique à quatre temps (10) est configuré pour arrêter une opération de combustion et jusqu'à ce que le vilebrequin (15) soit configuré pour arrêter la rotation vers l'avant,
le dispositif de commande (CT) étant configuré pour changer la force de freinage au moins une fois pendant la commande d'arrêt, en changeant une synchronisation de fonctionnement de la pluralité de parties de commutation (611 à 616) sur la base au moins à la fois d'une position du vilebrequin (15) et d'une valeur instantanée de la vitesse de rotation du vilebrequin (15) à la position.

2. Véhicule à selle (1) selon la revendication 1, dans lequel
le dispositif de commande (CT) comporte un dispositif de stockage (64) qui est configuré pour pré-stocker des données de changement comportant une pluralité de relations de correspondance d'une condition concernant une synchronisation de fonctionnement de la pluralité de parties de commutation (611 à 616) par rapport à une position du vilebrequin (15) et une valeur instantanée de la vitesse de rotation du vilebrequin (15) à la position, et
lors du changement de la force de freinage, le dispositif de commande (CT) est configuré pour changer la force de freinage en changeant, en temps réel, une synchronisation de fonctionnement de la pluralité de parties de commutation (611 à 616) en référence aux données de changement sur la base d'une position du vilebrequin (15) et d'une valeur instantanée de la vitesse de rotation du vilebrequin (15) à la position.

3. Véhicule à selle (1) selon la revendication 2, dans lequel
dans la commande de consommation d'énergie, le dispositif de commande (CT) est configuré pour commander un courant à fournir de la batterie (4) à la machine électrique tournante de type à aimant permanent (20), conformément à une tension de la batterie (4).

4. Véhicule à selle (1) selon l'une quelconque des revendications 1 à 3, dans lequel
la machine électrique tournante de type à aimant permanent (20) comporte un enroulement qui est électriquement relié à la pluralité de parties de commutation (611 à 616), et
pendant la commande d'arrêt, le dispositif de commande (CT) est configuré pour changer la force de freinage en changeant, en temps réel, une synchronisation de fonctionnement de la pluralité de parties de commutation (611 à 616) de manière à démarrer une commande de court-circuit où l'enroulement est court-circuité pour appliquer une force de freinage à la rotation vers l'avant du vilebrequin (15), sur la base au moins à la fois d'une position du vilebrequin (15) et d'une valeur instantanée de la vitesse de rotation du vilebrequin (15) à la position.

5. Véhicule à selle (1) selon la revendication 4, dans lequel
le dispositif de commande (CT) comporte un dispositif de stockage (64) qui est configuré pour pré-stocker des données de changement comportant une pluralité de relations de correspondance d'une condition concernant une synchronisation de fonctionnement de la pluralité de parties de commutation (611 à 616) pour démarrer la commande de court-circuit par rapport à une pluralité de positions où le vilebrequin (15) se situe de manière séquentielle dans un cycle de combustion du corps de moteur monocylindrique à quatre temps (10) et une valeur instantanée de la vitesse de rotation du vilebrequin (15) à chacune de la pluralité de positions, la valeur instantanée incluse dans les données de changement étant une valeur de limite supérieure de la vitesse qui permet, suite au démarrage de la commande de court-circuit à une position correspondant à la valeur instantanée, au vilebrequin (15) d'être arrêté dans une région cible prédéterminée dans le cycle de combustion, et
lorsque la valeur instantanée de la vitesse de rotation du vilebrequin (15) devient inférieure ou égale à une valeur instantanée incluse dans les données de changement, le dispositif de commande (CT) amène la pluralité d'éléments de commutation (611 à 616) à démarrer la commande de court-circuit à une position, parmi la pluralité de positions, correspondant à la valeur instantanée incluse dans les données de changement.

6. Véhicule à selle (1) selon l'une quelconque des revendications 1 à 5, dans lequel
chaque fois que le vilebrequin (15) tourne selon un angle de mesure prédéfini (θ), le dispositif de commande (CT) est configuré pour obtenir, en tant que valeur instantanée de la vitesse de rotation du vilebrequin (15), la vitesse de rotation du vilebrequin (15) tournant selon l'angle de mesure (θ).

7. Véhicule à selle (1) selon la revendication 6, dans lequel
l'angle de mesure (θ) est égal à 30 degrés.

8. Véhicule à selle (1) selon la revendication 6, dans lequel
l'angle de mesure (θ) est égal à 15 degrés.

9. Véhicule à selle (1) selon la revendication 6, dans lequel
l'angle de mesure (θ) est égal à 10 degrés.

10. Véhicule à selle (1) selon l'une quelconque des revendications 1 à 9, dans lequel
le dispositif de commande (CT) change la force de freinage au moins une fois pendant la commande d'arrêt en changeant, en temps réel, une synchronisation de fonctionnement de la pluralité de parties de commutation (611 à 616) sur la base à la fois d'une position du vilebrequin (15) et d'une valeur instantanée de la vitesse de rotation du vilebrequin (15) à la position, de sorte que la machine électrique tournante de type à aimant permanent (20) soit configurée pour amener le vilebrequin (15) à arrêter la rotation dans l'un ou l'autre d'un temps de détente et d'un temps d'échappement du corps de moteur monocylindrique à quatre temps (10).

11. Véhicule à selle (1) selon l'une quelconque des revendications 1 à 10, dans lequel
le dispositif de commande (CT) est configuré pour changer la force de freinage au moins une fois pendant la commande d'arrêt en changeant, en temps réel, une synchronisation de fonctionnement de la pluralité de parties de commutation (611 à 616) sur la base à la fois d'une position du vilebrequin (15) et d'une valeur instantanée de la vitesse de rotation du vilebrequin (15) à la position pendant que le vilebrequin (15) tourne dans l'un ou l'autre d'un temps d'admission et d'un temps de compression du corps de moteur monocylindrique à quatre temps (10).

12. Véhicule à selle (1) selon l'une quelconque des revendications 1 à 11, dans lequel
le dispositif de commande (CT) est configuré pour changer la force de freinage au moins une fois pendant la commande d'arrêt en changeant, en temps réel, une synchronisation de fonctionnement de la pluralité de parties de commutation (611 à 616) sur la base à la fois d'une position du vilebrequin (15) et d'une valeur instantanée de la vitesse de rotation du vilebrequin (15) à la position pendant que le vilebrequin (15) tourne dans un temps d'admission du corps de moteur monocylindrique à quatre temps (10).

13. Véhicule à selle (1) selon l'une quelconque des revendications 1 à 12, dans lequel
le corps de moteur monocylindrique à quatre temps (10) comporte un dispositif d'injection de carburant et une soupape d'admission, et
le dispositif de commande (CT) est configuré pour démarrer la rotation du vilebrequin (15) en commandant la pluralité de parties de commutation (611 à 616) en réponse à la réception d'une instruction de démarrage, et ensuite est configuré pour amener le dispositif d'injection de carburant à injecter un carburant en réponse à la rotation du vilebrequin (15) selon un certain angle prédéfini, le certain angle prédéfini étant inférieur ou égal à un angle d'un point mort haut de compression à une position où la soupape d'admission est fermée dans le corps de moteur monocylindrique à quatre temps (10).
